# EUROPEAN PATENT APPLICATION

(11) **EP 4 502 059 A1**
(43) Date of publication of application: **05.02.2025**
(21) Application number: 23779516.6
(22) Date of filing: 13.03.2023
(51) Int. Cl.: C08L 65/00, C08F 299/00, C08G 61/08, C08K 3/013, C08L 9/00

(54) **RUBBER COMPOSITION AND CROSSLINKED RUBBER PRODUCT**

(30) Priority: 31.03.2022 JP 2022058946
(71) Applicant: Zeon Corporation, Tokyo 100-8246 (JP)
(72) Inventor: YAMANE, Honami, Tokyo 100-8246 (JP); SAKURAI, Takuro, Tokyo 100-8246 (JP); HAYANO, Shigetaka, Tokyo 100-8246 (JP)
(74) Representative: Maiwald GmbH
(86) International application number: PCT/JP2023/009677
(87) International publication number: WO 2023/189496

(57) **Abstract**

Provided is a rubber composition comprising a copolymer represented by general formula (1) and a filler, 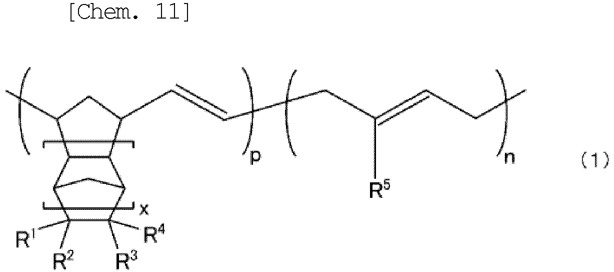 wherein R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, "x" is 0 to 2, R⁵ represents a hydrogen atom or a methyl group, "p" is 30 to 2000, and "n" is 200 to 5000; R¹ and R², and R³ and R⁴ may each be bonded together to form a ring; and multiple R²s to R⁵s may be the same or different from each other, and the values of a plurality of "x" may be the same or different.

## Description

### TECHNICAL FIELD

The present invention relates to a rubber composition and a cross-linked rubber, and more specifically relates to a rubber composition which can provide a cross-linked rubber having excellent fracture resistance, wet grip properties, and reduced heat buildup, and a cross-linked rubber obtained by using such a rubber composition.

### BACKGROUND ART

It is generally known that ring-opening metathesis polymerization of cyclopentene and a norbornene compound in the presence of a so-called Ziegler-Natta catalyst consisting of a compound with a transition metal of Group 6 of the periodic table, such as WCl₆ or MoCl₅, and an organic metal activator, such as triisobutylaluminium, diethylaluminium chloride, or tetrabutyltin affords an unsaturated linear ring-opened polymer. A method in which the compatibility of polymers with inorganic particles is improved by introducing a functional group containing a heteroatom to polymer chain ends is also known.

For example, Patent Document 1 discloses a composition for a fracture resistant material containing an inorganic material and a ring-opened copolymer containing a structural unit derived from a monocyclic olefin and a structural unit derived from a norbornene compound. According to the technique of Patent Document 1, a cross-linked rubber having excellent fracture resistance and chipping resistance and suitably used in applications to tires and the like can be provided.

On the other hand, recently, in a cross-linked rubber used in tire applications, while high fuel efficiency (low heat buildup) is required due to environmental and resource issues, excellent wet grip properties are also required for safety.

### RELATED ART DOCUMENT

### PATENT DOCUMENT

PATENT DOCUMENT 1: JP 2020-15832 A

### SUMMARY OF THE INVENTION

### PROBLEM TO BE SOLVED BY THE INVENTION

The present invention has been made in consideration of such circumstances. An object of the present invention is to provide a rubber composition which can provide a cross-linked rubber having excellent fracture resistance, excellent wet grip properties, and reduced heat buildup.

### MEANS FOR SOLVING THE PROBLEM

The present inventors, who have conducted research to achieve the above object, have found that the above object can be achieved by a rubber composition comprising a copolymer having a specific structural unit, and a filler. This finding has led to the present invention.

That is, the present invention provides a rubber composition comprising a copolymer represented by general formula (1) and a filler, 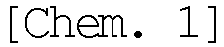 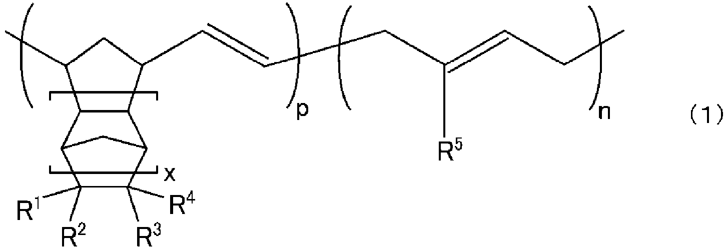 wherein R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, "x" is 0 to 2, R⁵ represents a hydrogen atom or a methyl group, "p" is 30 to 2000, and "n" is 200 to 5000; R¹ and R², and R³ and R⁴ may each be bonded together to form a ring; and multiple R²s to R⁵s may be the same or different from each other, and the values of a plurality of "x" may be the same or different.

In the rubber composition according to the present invention, the filler is preferably a carbon material.

In the rubber composition according to the present invention, the filler is preferably silica.

The present invention provides a cross-linked rubber formed by cross-linking the rubber composition described above.

In addition, the present invention provides a method for producing the rubber composition described above, the method comprising: a step of obtaining the copolymer represented by general formula (1) by allowing a cross-metathesis reaction to occur between a first ethylenically unsaturated polymer having an alicyclic structure in which the content of unsaturated bond carbon is 10 to 40 mol% and a second ethylenically unsaturated polymer having no alicyclic structures in which the content of unsaturated bond carbon is 20 to 50 mol% in the presence of a metathesis catalyst, and
a step of compounding a filler with the copolymer.

### EFFECTS OF THE INVENTION

The present invention can provide a rubber composition which can provide a cross-linked rubber having excellent fracture resistance, excellent wet grip properties, and reduced heat buildup.

### DESCRIPTION OF EMBODIMENTS

The rubber composition according to the present invention is a rubber composition comprising a copolymer represented by general formula (1) below and a filler.

### <Copolymer represented by general formula (1)>

The copolymer used in the present invention is represented by general formula (1) below.

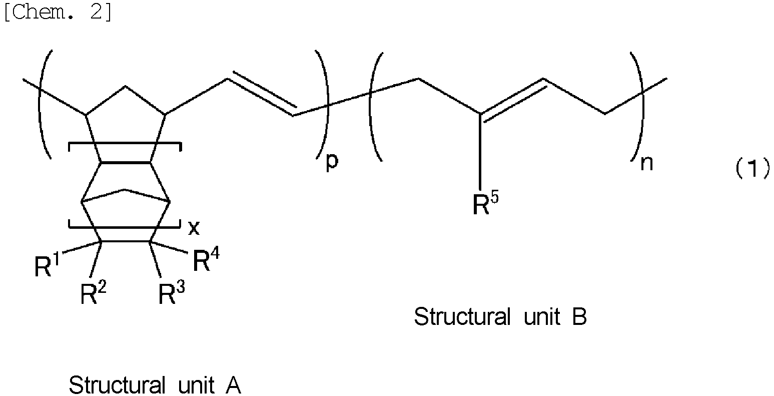

In general formula (1) above, R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, "x" is 0 to 2 , R⁵ represents a hydrogen atom or a methyl group, "p" is 30 to 2000, "n" is 200 to 5000. R¹ and R², and R³ and R⁴ may each be bonded together to form a ring. In general formula (1) above, multiple R²s to R⁵s may be the same or different from each other, and the values of a plurality of "x" may be the same or different.

The copolymer used in the present invention is a copolymer represented by general formula (1) above, and is a random copolymer containing "p" structural units A and "n" structural units B in which these structural units A and structural units B are randomly bonded to each other as represented by general formula (1) above. The copolymer represented by general formula (1) above can have any randomness, and may contain, for example, a block that contains about 2 to 40 successive structural units A and may contain a block that contains about 2 to 40 successive structural units B. In addition, in general formula (1) above, the carbon-carbon double bond structure contained in the structural unit A and the carbon-carbon double bond structure contained in the structural unit B can have either a cis configuration or a trans configuration. The configuration is not particularly limited and may be either a cis configuration or a trans configuration (in general formula (1) above, and an example of a trans configuration is shown, but both a cis configuration and a trans configuration are possible).

The structural unit B has a structure having double bonds in the polymer main chain, and part of the structural units B may be a structural unit having a double bond in a side chain as shown in the following formula (B') or the following formula (B''). That is, the copolymer represented by general formula (1) above may contain the structural unit A and the structural unit B, and a structural unit represented by the following formula (B') and/or a structural unit represented by the following formula (B'').

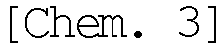

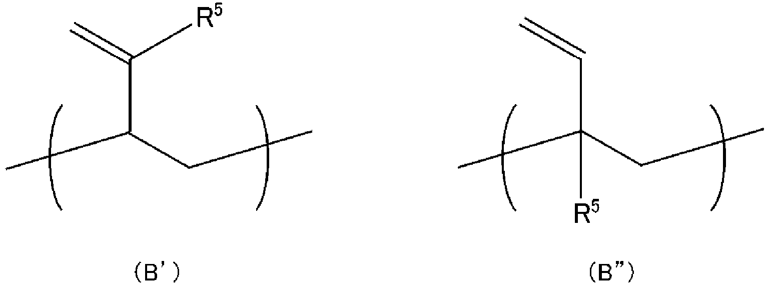

In general formula (1) above, R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, and preferably represent a hydrogen atom or an optionally substituted hydrocarbon group having 1 to 6 carbon atoms.

Examples of the halogen atom include a fluorine atom, a chlorine atom, a bromine atom, and the like.

Examples of the hydrocarbon group of the optionally substituted hydrocarbon group having 1 to 20 carbon atoms include alkyl groups such as a methyl group, an ethyl group, a propyl group, an isopropyl group, a butyl group, an isobutyl group, a sec-butyl group, a tert-butyl group, a pentyl group, an isopentyl group, a hexyl group, a heptyl group, an octyl group, a nonyl group, and a decyl group; cycloalkyl groups such as a cyclopropyl group, a cyclobutyl group, a cyclopentyl group, a cyclohexyl group, and a cycloheptyl group; alkenyl groups such as a vinyl group, a 1-propenyl group, an allyl group, a 1-butenyl group, a 2-butenyl group, a pentenyl group, a hexenyl group, and a cyclohexenyl group; alkynyl groups such as an ethynyl group, a 1-propynyl group, a 2-propynyl (propargyl) group, a 3-butynyl group, a pentynyl group, and a hexynyl group; aryl groups such as a phenyl group, a tolyl group, a xylyl group, a biphenylyl group, a 1-naphthyl group, a 2-naphthyl group, an anthryl group, and a phenanthryl group; aralkyl groups such as a benzyl group and a phenethyl group; and the like. Examples of the substituent of these groups include halogen atoms such as a fluorine atom and a chlorine atom; alkoxy groups such as a methoxy group and an ethoxy group; and the like.

In general formula (1) above, "x" is 0 to 2, preferably 0 or 1. In general formula (1) above, "p" is 30 to 2000, preferably "p" is 45 to 1900, more preferably "p" is 60 to 1800. When the value of "p" is within the above ranges, a cross-linked rubber having excellent fracture resistance, excellent wet grip properties, and reduced heat buildup can be obtained. In general formula (1) above, multiple R¹s to R⁴s may be the same or different from each other, and the values of a plurality of "x" may be the same or different. That is, when there are 2 or more "p", it means that 2 or more structural units A are contained, and in the 2 or more structural units A, multiple R¹s to R⁴s contained therein may be the same or different from each other, and the values of a plurality of "x" may be the same or different. For example, a structural unit in which R¹ to R⁴ each represent a hydrogen atom and x = 0 and a structural unit in which R¹ to R⁴ each represent a hydrogen atom and x = 1 may be contained as the structural units A.

In general formula (1) above, R⁵ represents a hydrogen atom or a methyl group, preferably a hydrogen atom.

In general formula (1) above, "n" is 200 to 5000, preferably 250 to 4500, more preferably 300 to 4000. When the value of "n" is within the above ranges, a cross-linked rubber having excellent fracture resistance, excellent wet grip properties, and reduced heat buildup can be obtained. In general formula (1) above, a plurality of R⁵s may be the same or different from each other, but preferably all the R⁵s are the same.

In general formula (1) above, the ratio of "p" to "n", i.e. "p:n" is preferably 10:90 to 70:30, more preferably 15:85 to 65:35, still more preferably 20:80 to 60:40. When the ratio of "p:n" is within the above ranges, a cross-linked rubber having more excellent fracture resistance, more excellent wet grip properties, and further reduced heat buildup can be obtained.

In general formula (1) above, the ratio between the structural units A and the structural units B is, as a weight ratio of "Structural units A:Structural units B", preferably 30:70 to 75:25, more preferably 35:65 to 70:30, still more preferably 40:60 to 65:35. When the ratio between the structural units A and the structural units B is within the above ranges, a cross-linked rubber having more excellent fracture resistance, more excellent wet grip properties, and further reduced heat buildup can be obtained.

The weight average molecular weight (Mw) of the copolymer represented by general formula (1) used in the present invention is not particularly limited, but is preferably 50,000 to 1,000,000, more preferably 100,000 to 500,000, still more preferably 150,000 to 300,000. When the weight average molecular weight (Mw) is within the above ranges, a cross-linked rubber having more excellent fracture resistance, more excellent wet grip properties, and further reduced heat buildup can be obtained. The molecular weight distribution (Mw/Mn) of the copolymer represented by general formula (1) is not particularly limited, but is preferably 1.0 to 5.0, more preferably 1.5 to 3.0. In the present invention, the weight average molecular weight (Mw), the number average molecular weight (Mn), and the molecular weight distribution (Mw/Mn) can be determined as values measured against polystyrene standards by gel permeation chromatography (GPC) using tetrahydrofuran as a solvent.

The glass transition temperature (Tg) of the copolymer represented by general formula (1) used in the present invention is preferably -80 to 10°C, more preferably -70 to 0°C, still more preferably -65 to -5°C. When the glass transition temperature (Tg) is within the above ranges, a cross-linked rubber having more excellent fracture resistance, more excellent wet grip properties, and reduced heat buildup can be obtained.

The method for producing the copolymer represented by general formula (1) used in the present invention is not particularly limited. The copolymer represented by general formula (1) used in the present invention can be suitably produced by allowing a cross-metathesis reaction to occur between a first ethylenically unsaturated polymer having an alicyclic structure in which the content of unsaturated bond carbon is 10 to 40 mol% and a second ethylenically unsaturated polymer having no alicyclic structures in which the content of unsaturated bond carbon is 20 to 50 mol% in the presence of a metathesis catalyst. The content of unsaturated bond carbon in the first ethylenically unsaturated polymer is preferably 10 to 38 mol%, more preferably 11 to 35 mol%, and the content of unsaturated bond carbon in the second ethylenically unsaturated polymer is preferably 25 to 50 mol%, more preferably 30 to 50 mol%. The content of unsaturated bond carbon is a proportion of carbon atoms that form carbon-carbon double bonds or carbon-carbon triple bonds to the carbon atoms that constitute the first ethylenically unsaturated polymer or the second ethylenically unsaturated polymer. In the content of unsaturated bond carbon as described above, carbon atoms that form aromatic double bonds are excluded.

As described above, the copolymer represented by general formula (1) used in the present invention can be suitably produced by allowing a cross-metathesis reaction to occur between the first ethylenically unsaturated polymer and the second ethylenically unsaturated polymer in the presence of a metathesis catalyst. In the cross-metathesis reaction, a carbon-carbon double-bond exchange reaction can occur between carbon-carbon double bonds that constitute the first ethylenically unsaturated polymer and carbon-carbon double bonds that constitute the second ethylenically unsaturated polymer by the action of the metathesis catalyst, and thus the copolymer represented by general formula (1) can be produced.

For example, a polymer represented by general formula (2) below can be suitably used as the first ethylenically unsaturated polymer, and a polymer represented by general formula (3) below can be suitably used as the second ethylenically unsaturated polymer. By way of example, a reaction using the polymer represented by general formula (2) below and the polymer represented by general formula (3) below is described below. 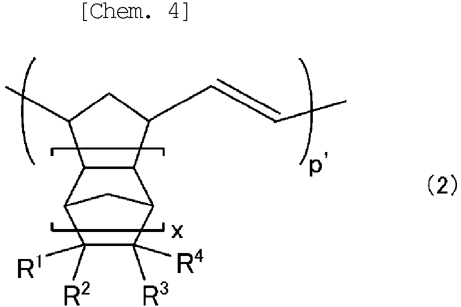 wherein R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, "x" is 0 to 2 , and "p'" is 100 to 10,000. R¹ and R², and R³ and R⁴ may each be bonded together to form a ring. In general formula (2) above, multiple R²s to R⁴s may be the same or different from each other, and the values of a plurality of "x" may be the same or different. 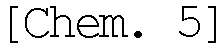 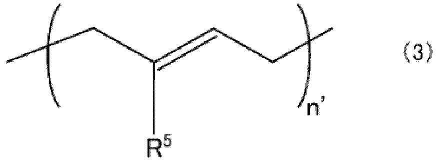 wherein R⁵ represents a hydrogen atom or a methyl group, and "n'" is 500 to 20,000. In general formula (3), a plurality of R⁵s may be the same or different from each other.

When the polymer represented by general formula (2) above and the polymer represented by general formula (3) above are reacted in the presence of a metathesis catalyst, a carbon-carbon double-bond exchange reaction occurs between carbon-carbon double bonds contained in the polymer represented by general formula (2) above and carbon-carbon double bonds contained in the polymer main chain of the polymer represented by general formula (3) above (carbon-carbon double bonds in "n'" structural units), and as a result, structural units that constitute the polymer represented by general formula (2) above and structural units that constitute the polymer represented by general formula (3) above are randomly bonded to each other to form a polymer. In this case, since the polymer represented by general formula (2) above and the polymer represented by general formula (3) above are used, the polymer may contain a block that contains about 2 to 40 successive structural units derived from the polymer represented by general formula (2) above, or the polymer may contain a block that contains about 2 to 40 successive structural units derived from the polymer represented by general formula (3) above.

In general formula (2) above, R¹ to R⁴ each independently represent a hydrogen atom, a halogen atom, or an optionally substituted hydrocarbon group having 1 to 20 carbon atoms, and the preferred ranges or preferred examples thereof are the same as in general formula (1) above, "x" is 0 to 2, preferably 0 or 1. "p'" is 100 to 10,000, preferably 150 to 7500, more preferably 200 to 5000.

The polymer represented by general formula (2) above can be produced by, for example, ring-opening polymerization of a compound represented by general formula (4) below.

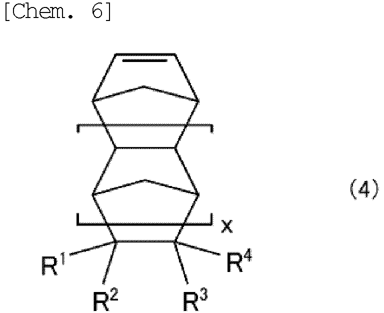

In general formula (4) above, R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, and the preferred ranges or preferred examples thereof are the same as in general formula (1) above, "x" is 0 to 2, preferably 0 or 1.

Specific examples of the compounds represented by general formula (4) above include the following compounds:
bicyclo[2.2.1]hept-2-enes having no substituents or having a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo [9.2.1.0^{2,10}.0^{3,8}]tetradeca-3,5,7,12-tetraene (also referred to as 1,4-methano-1,4,4a,9a-tetrahydro-9H-fluorene), tetracyclo[10.2.1.0^{2.11}.0^{4,9}]pentadeca-4,6,8,13-tetraene (also referred to as 1,4-methano-1,4,4a,9,9a,10-hexahydroanthracene), dicyclopentadiene, methyl dicyclopentadiene, and dihydrodicyclopentadiene (tricyclo [5.2.1.0^{2,6}]dec-8-ene) ;
tetracyclo[6.2.1.1^{3,6}.0^{2,7}]dodec-4-enes having no substituents or having a hydrocarbon substituent, such as tetracyclo [6.2.1.1^{3,6}.0^{2,7}]dodec-4-ene (tetracyclododecene), 9-methyltetracyclo[6.2.1.1^{3,6}.0^{2,7}]dodec-4-ene, 9-ethyltetracyclo [6.2.1.1^{3,6}.0^{2,7}]dodec-4-ene, 9-cyclohexyltetracyclo [6.2.1.1^{3,6}.0^{2,7}]dodec-4-ene, 9-cyclopentyltetracyclo [6.2.1.1^{3,6}.0^{2,7}]dodec-4-ene, 9-methylenetetracyclo [6.2.1.1^{3,6}.0^{2,7}]dodec-4-ene, 9-ethylidenetetracyclo [6.2.1.1^{3,6}.0^{2,7}]dodec-4-ene, 9-vinyltetracyclo [6.2.1.1^{3,6}.0^{2,7}] dodec-4-ene, 9-propenyltetracyclo [6.2.1.1^{3,6}.0^{2,7}]dodec-4-ene, 9-cyclohexenyltetracyclo [6.2.1.1^{3,6}.0^{2,7}] dodec-4-ene, 9-cyclopentenyltetracyclo [6.2.1.1^{3,6}.0^{2,7}]dodec-4-ene, and 9-phenyltetracyclo [6.2.1.1^{3,6}.0^{2,7}] dodec-4-ene;
bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;
tetracyclo [6.2.1.1^{3,6}.0^{2,7}]dodec-4-enes having an alkoxycarbonyl group, such as methyltetracyclo[6.2.1.1^{3,6}.0^{2,7}]dodec-9-ene-4-carboxylate, and methyl 4-methyltetracyclo [6 . 2 .1.1^{3,6}.0^{2,7}] dodec-9-ene-4-carboxylate;
bicyclo[2.2.1]hept-2-enes having a hydroxycarbonyl group or an acid anhydride group, such as 5-norbornene-2-carboxylic acid, 5-norbornene-2,3-dicarboxylic acid, and 5-norbornene-2,3-dicarboxylic acid anhydride;
tetracyclo [6.2.1.1^{3,6}.0^{2,7}] dodec-4-enes having a hydroxycarbonyl group or an acid anhydride group, such as tetracyclo[6.2.1.1^{3,6}.0^{2,7}]dodec-9-ene-4-carboxylic acid, tetracyclo [6 .2.1.1^{3,6}.0^{2,7}]dodec-9-ene-4,5-dicarboxylic acid, and tetracyclo[6.2.1.1^{3,6}.0^{2,7}]dodec-9-ene-4, 5-dicarboxylic acid anhydride;
bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;
tetracyclo[6.2.1.1^{3,6}.0^{2,7}] dodec-4-enes having a hydroxyl group, such as tetracyclo[6.2.1.1^{3,6}.0^{2,7}]dodec-9-ene-4-methanol, and tetracyclo[6.2.1.1^{3,6}.0^{2,7}] dodec-9-ene-4-ol;
bicyclo[2.2.1]hept-2-enes having a hydrocarbonyl group, such as 5-norbornene-2-carbaldehyde;
tetracyclo[6.2.1.1^{3,6}.0^{2,7}] dodec-4-enes having a hydrocarbonyl group, such as tetracyclo[6.2.1.1^{3,6}.0^{2,7}]dodec-9-ene-4-carbaldehyde;
bicyclo[2.2.1]hept-2-enes having an alkoxycarbonyl group and a hydroxycarbonyl group, such as 3-methoxycarbonyl-5-norbornene-2-carboxylic acid;
bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;
tetracyclo [6 . 2.1.1^{3,6}.0^{2,7}] dodec-4-enes having a carbonyloxy group, such as 9-tetracyclo[6.2.1.1^{3,6}.0^{2,7}] dodec-4-enyl acetate, 9-tetracyclo[6.2.1.1^{3,6}.0^{2,1}] dodec-4-enyl acrylate, and 9-tetracyclo[6.2.1.1^{3,6}.0^{2,7}] dodec-4-enyl methacrylate;
bicyclo[2.2.1]hept-2-enes having a functional group containing a nitrogen atom, such as 5-norbornene-2-carbonitrile, 5-norbornene-2-carboxamide, and 5-norbornene-2,3-dicarboxylic acid imide;
tetracyclo[6.2.1.1^{3,6}.0^{2,7}] dodec-4-enes having a functional group containing a nitrogen atom, such as tetracyclo[6.2.1.1^{3,6}.0^{2,7}] dodec-9-ene-4-carbonitrile, tetracyclo[6.2.1.1^{3,6}.0^{2,7}]dodec-9-ene-4-carboxamide, and tetracyclo[6.2.1.1^{3,6}.0^{2,7}]dodec-9-ene-4,5-dicarboxylic acid imide;
bicyclo[2.2.1]hept-2-enes having a halogen atom, such as 5-chloro-2-norbornene;
tetracyclo [6.2.1.1^{3,6}.0^{2,7}]dodec-4-enes having a halogen atom, such as 9-chlorotetracyclo [6.2.1.1^{3,6}.0^{2,7}] dodec-4-ene;
bicyclo[2.2.1]hept-2-enes having a functional group containing a silicon atom, such as 5-trimethoxysilyl-2-norbornene and 5-triethoxysilyl-2-norbornene;
tetracyclo [6.2.1.1^{3,6}.0^{2,7}] dodec-4-enes having a functional group containing a silicon atom, such as 4-trimethoxysilyltetracyclo[6.2.1.1^{3,6}.0^{2,7}] dodec-9-ene and 4-triethoxysilyltetracyclo[6.2.1.1^{3,6}.0^{2,7}]dodec-9-ene.

As the compounds represented by general formula (4) above, bicyclo[2.2.1]hept-2-enes having no substituents or having a hydrocarbon substituent and tetracyclo[6.2.1.1^{3,6}.0^{2,7}]dodec-4-enes having no substituents or having a hydrocarbon substituent are preferred. Among these, 2-norbornene, dicyclopentadiene,
tetracyclo[6.2.1.1^{3,6}.0^{2,7}]dodec-4-ene (tetracyclododecene), tetracyclo [9.2.1.0².¹⁰.0^{3,8}]tetradeca-3,5,7,12-tetraene (1,4-methano-1,4,4a,9a-tetrahydro-9H-fluorene, MTHF) are more preferred.

The compounds represented by general formula (4) above may be used alone or in combination. That is, the compound can be a copolymerized product of two or more monomers.

Examples of the method for ring-opening polymerization of the compounds represented by general formula (4) above include, but are not particularly limited to, a method in which ring-opening polymerization of the compounds represented by general formula (4) above is performed in a solvent in the presence of a ring-opening polymerization catalyst. Examples of the ring-opening polymerization catalyst include a combination of a compound with a transition metal of Group 6 of the periodic table as a major catalyst and an organometallic compound as a catalytic promoter, a metathesis catalyst such as a ruthenium-carbene complex, and the like. When the ring-opening polymerization of the compounds represented by general formula (4) above is performed, an olefin compound or a diolefin compound may be added as a molecular weight modifier to the polymerization reaction system.

The weight average molecular weight (Mw) of the polymer represented by general formula (2) above is not particularly limited, but is preferably 50,000 to 1,000,000, more preferably 50,000 to 750,000, still more preferably 100,000 to 500,000. The molecular weight distribution (Mw/Mn) of the polymer represented by general formula (2) above is not particularly limited, but is preferably 1.0 to 5.0, more preferably 1.5 to 3.0.

Examples of the polymer represented by general formula (3) above include, but are not particularly limited to, polybutadiene, polyisoprene, a copolymer of butadiene and isoprene, and the like.

In general formula (3) above, R⁵ represents a hydrogen atom or a methyl group, and "n'" is 500 to 20000. "n'" is preferably 750 to 20000, more preferably 1000 to 15000.

For example, when polybutadiene, polyisoprene, or a copolymer of butadiene and isoprene is used as a polymer represented by general formula (3) above, the amount of vinyl bond in the polymer is not particularly limited. As polybutadiene, polyisoprene, or a copolymer of butadiene and isoprene, those produced by anionic polymerization using an organic active metal that can contribute to anionic polymerization, such as an organic alkali metal compound, an organic alkaline earth metal compound, and organic lanthanoid series rare earth metal compounds, can be used. As polyisoprene, besides synthetic polyisoprene, natural rubber can be used.

The weight average molecular weight (Mw) of the polymer represented by general formula (3) above is not particularly limited, but is preferably 50,000 to 1,000,000, more preferably 50,000 to 750,000, still more preferably 100,000 to 500,000. The molecular weight distribution (Mw/Mn) of the polymer represented by general formula (3) above is not particularly limited, but is preferably 1.0 to 5.0, more preferably 1.5 to 3.0.

The copolymer represented by general formula (1) used in the present invention is produced by allowing a cross-metathesis reaction to occur between the polymer represented by general formula (2) above (a first ethylenically unsaturated polymer) and the polymer represented by general formula (3) above (a second ethylenically unsaturated polymer) in the presence of a metathesis catalyst. It is to be noted that two or more polymers represented by general formula (2) above (first ethylenically unsaturated polymers) or two or more polymers represented by general formula (3) above (second ethylenically unsaturated polymers) may be used in combination.

The amounts of the polymer represented by general formula (2) above (a first ethylenically unsaturated polymer) and the polymer represented by general formula (3) above (a second ethylenically unsaturated polymer) used are not particularly limited, and can be selected based on the ratio of "p" to "n" in general formula (1) above, but the weight ratio of "the polymer represented by general formula (2) (a first ethylenically unsaturated polymer):the polymer represented by general formula (3) (a second ethylenically unsaturated polymer)" is preferably 90:10 to 20:80, more preferably 80:20 to 30:70, still more preferably 70:30 to 40:60.

The metathesis catalyst used is a complex in which a plurality of ions, atoms, polyatomic ions, and/or compounds are bonded to a transition metal atom as a central atom. As the transition metal atom, atoms of Groups 5, 6 and 8 of the periodic table (the short form of periodic table, the same applies hereinafter) are used. Examples of the transition metal atom include, but are not particularly limited to, vanadium, niobium, and tantalum as atoms of Group 5; molybdenum and tungsten as atoms of Group 6; and ruthenium and osmium as atoms of Group 8.

Among these, preferably used as a metathesis catalyst are complexes of molybdenum or tungsten of Group 6 and ruthenium or osmium of Group 8, and particularly preferred are complex catalysts of molybdenum or tungsten and carbene complexes of molybdenum, tungsten, or ruthenium. A ruthenium-carbene complex is preferred because it is relatively stable toward oxygen or moisture in the air, hardly inactivated, and excellent in catalytic activity.

More specifically, examples of the complex catalyst containing a transition metal of Group 6 of the periodic table include tungsten hexachloride, tungsten oxytetrachloride, tungsten(ethylimide) (tetrachloride)(diethyl ether), tungsten(ethylimide)(tetrachloride)(tetrahydrofuran), tungsten(phenylimide) (tetrachloride)(diethyl ether), tungsten(phenylimide) (tetrachloride)(tetrahydrofuran), tungsten(2,6-dimethylphenylimide) (tetrachloride)(diethyl ether), bis{3,3'-di(t-butyl)-5,5',6,6'-tetramethyl-2,2'-biphenoxy}oxymolybdenum (VI), bis{3,3',5,5'-tetramethyl-2,2'-biphenoxy}oxymolybdenum(VI), bis{3,3'-di(t-butyl)-5,5',6,6'-tetramethyl-2,2'-biphenoxy}oxytungsten(VI), {3,3'-di(t-butyl)-5,5',6,6'-tetramethyl-2,2'-biphenoxy}oxytungsten(VI) dichloride, and the like.

When the above-described complex catalyst containing a transition metal of Group 6 of the periodic table is used as a metathesis catalyst, in order to increase catalytic activity, it is preferred to use the above-described complex catalyst containing a transition metal of Group 6 of the periodic table in combination with a different catalyst other than the complex catalyst as a cocatalyst.

Examples of the different catalyst include known organometallic compounds. As the organometallic compounds, preferred is an organometallic compound of any one of Groups 1, 2, 12, 13, and 14 of the periodic table having a hydrocarbon group having 1 to 20 carbon atoms, more preferred are organolithium compounds, organomagnesium compounds, organozinc compounds, organoaluminum compounds, and organotin compounds, and particularly preferred are organolithium compounds and organoaluminum compounds.

Examples of the organolithium compounds include n-butyllithium, methyllithium, phenyllithium, neopentyllithium, neophyllithium, and the like.

Examples of the organomagnesium compounds include butylethylmagnesium, butyloctylmagnesium, dihexylmagnesium, ethylmagnesium chloride, n-butylmagnesium chloride, allylmagnesium bromide, neopentylmagnesium chloride, neophylmagnesium chloride, and the like.

Examples of the organozinc compounds include dimethylzinc, diethylzinc, diphenylzinc, and the like.

Examples of the organoaluminum compounds include trimethylaluminum, triethylaluminum, triisobutylaluminum, diethylaluminum chloride, diethylaluminum ethoxide, ethylaluminum dichloride, ethylaluminum diethoxide, and the like.

Examples of the organotin compounds include tetramethyltin, tetra(n-butyl)tin, tetraphenyltin, and the like.

These different catalysts may be used alone or in combination.

In addition, examples of the complex catalyst containing a transition metal of Group 6 of the periodic table include compounds represented by general formula (5) below.

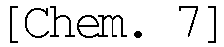

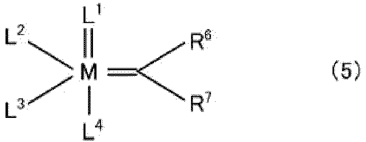

In general formula (5), M represents a molybdenum atom or a tungsten atom.

R⁶ and R⁷ each independently represent a hydrogen atom; an alkyl group having 1 to 12 carbon atoms, such as a methyl group, an ethyl group, an n-propyl group, an isopropyl group, an n-butyl group, an isobutyl group, or a t-butyl group; a cycloalkyl group having 3 to 20 carbon atoms, such as a cyclopropyl group, a cyclopentyl group, or a cyclohexyl group; or an optionally substituted aryl group having 6 to 20 carbon atoms. Examples of the aryl group of the optionally substituted aryl group include a phenyl group, a 1-naphthyl group, a 2-naphthyl group, and the like. Examples of the substituent of the aryl group include alkyl groups having 1 to 12 carbon atoms, such as a methyl group and an ethyl group; halogen atoms such as a fluorine atom, a chlorine atom, and a bromine atom; alkoxy groups having 1 to 12 carbon atoms, such as a methoxy group, an ethoxy group, and an isopropoxy group; haloalkyl groups having 1 to 12 carbon atoms, such as a trifluoromethyl group; haloalkoxy groups having 1 to 12 carbon atoms, such as a trifluoromethoxy group; aryl groups having 6 to 12 carbon atoms which may be optionally substituted, such as a phenyl group, a 4-methylphenyl group, a 2,4-dimethylphenyl group, a 2-chlorophenyl group, and a 3-methoxyphenyl group; and the like.

L¹ represents a nitrogen atom or an oxygen atom optionally having a substituent selected from an alkyl group having 1 to 12 carbon atoms, an optionally substituted aryl group having 6 to 20 carbon atoms, and an optionally substituted cycloalkyl group having 3 to 20 carbon atoms.

The alkyl group having 1 to 12 carbon atoms as a substituent of the nitrogen atom or the oxygen atom as L¹ may be a linear, branched, or cyclic group. Specific examples thereof include a methyl group, an ethyl group, a propyl group, an isopropyl group, a butyl group, a t-butyl group, a pentyl group, a hexyl group, and the like.

Examples of the cycloalkyl group having 3 to 20 carbon atoms as a substituent of the nitrogen atom or the oxygen atom as L¹ include a cyclopropyl group, a cyclopentyl group, a cyclohexyl group, a cyclooctyl group, an adamantyl group, and the like.

Examples of the aryl group having 6 to 12 carbon atoms as a substituent of the nitrogen atom or the oxygen atom as L¹ include a phenyl group, a 1-naphthyl group, a 2-naphthyl group, and the like.

The substituent as an optional substituent of the cycloalkyl group having 3 to 20 carbon atoms or the aryl group having 6 to 12 carbon atoms of the nitrogen atom or the oxygen atom as L¹ is not particularly limited. Examples of the substituent include alkyl groups having 1 to 12 carbon atoms, such as a methyl group and an ethyl group; halogen atoms such as a fluorine atom, a chlorine atom, and a bromine atom; alkoxy groups having 1 to 12 carbon atoms, such as a methoxy group, an ethoxy group, and an isopropoxy group; haloalkyl groups having 1 to 12 carbon atoms, such as a trifluoromethyl group; haloalkoxy groups having 1 to 12 carbon atoms, such as a trifluoromethoxy group; aryl groups having 6 to 12 carbon atoms which may be optionally substituted, such as a phenyl group, a 4-methylphenyl group, a 2,4-dimethylphenyl group, a 2-chlorophenyl group, and a 3-methoxyphenyl group; an amino group; monosubstituted amino groups such as a methylamino group; disubstituted amino groups such as a dimethylamino group; an imino group; and the like.

L² and L³ are each an optionally substituted 5- to 15-membered conjugated heterocyclic group having at least one nitrogen atom or an alkoxy group including O-R⁸ where R⁸ is a group selected from an optionally substituted alkyl group having 1 to 12 carbon atoms and an optionally substituted aryl group having 6 to 30 carbon atoms.

Examples of the conjugated heterocyclic group as L² and L³ include 5-membered conjugated heterocyclic groups such as a pyrrolyl group, an imidazolyl group, a pyrazolyl group, an oxazolyl group, and a thiazolyl group; 6-membered conjugated heterocyclic groups such as a pyridyl group, a pyridazinyl group, a pyrimidinyl group, a pyrazinyl group, and a triazinyl group; fused-ring conjugated heterocyclic groups such as a quinazolinyl group, a phthalazinyl group, and a pyrrolopyridyl group; and the like.

The substituent as an optional substituent of the conjugated heterocyclic group is not particularly limited. Examples of the substituent include alkyl groups having 1 to 12 carbon atoms, such as a methyl group and an ethyl group; halogen atoms such as a fluorine atom, a chlorine atom, and a bromine atom; alkoxy groups having 1 to 12 carbon atoms, such as a methoxy group, an ethoxy group, and an isopropoxy group; haloalkyl groups having 1 to 12 carbon atoms, such as a trifluoromethyl group; haloalkoxy groups having 1 to 12 carbon atoms, such as a trifluoromethoxy group; aryl groups having 6 to 12 carbon atoms which optionally substituted, such as a phenyl group, a 4-methylphenyl group, a 2,4-dimethylphenyl group, a 2-chlorophenyl group, and a 3-methoxyphenyl group; an amino group; monosubstituted amino groups such as a methylamino group; disubstituted amino groups such as a dimethylamino group; an imino group; and the like.

Examples of the alkyl group having 1 to 12 carbon atoms of the optionally substituted alkyl group having 1 to 12 carbon atoms as R⁸ include a methyl group, an ethyl group, a propyl group, an isopropyl group, a butyl group, a t-butyl group, and a pentyl group. When both L² and L³ include O-R⁸, the alkyl groups of R⁸ may be bonded to each other.

The substituent as an optional substituent of the alkyl group having 1 to 12 carbon atoms as R⁸ is not particularly limited. Examples of the substituent include halogen atoms such as a fluorine atom, a chlorine atom, and a bromine atom; alkoxy groups having 1 to 12 carbon atoms, such as a methoxy group, an ethoxy group, and an isopropoxy group; haloalkyl groups having 1 to 12 carbon atoms, such as a trifluoromethyl group; haloalkoxy groups having 1 to 12 carbon atoms, such as a trifluoromethoxy group; aryl groups having 6 to 12 carbon atoms which may be optionally substituted, such as a phenyl group, a 4-methylphenyl group, a 2,4-dimethylphenyl group, a 2-chlorophenyl group, and a 3-methoxyphenyl group; an amino group; monosubstituted amino groups such as a methylamino group; disubstituted amino groups such as a dimethylamino group; an imino group; and the like.

Specific examples of R⁸ include a 1,1,1,3,3,3-hexafluoro-2-propoxy group, a 2-methyl-2-propoxy group, a 1,1,1-trifluoro-2-methyl-2-propoxy group, a 1,1,1-trifluoro-2-trifluoromethyl-2-propoxy group, and a 2-trifluoromethyl-2-phenyl-1,1,1-trifluoroethoxy group. Specific examples of the optionally substituted aryl group having 6 to 30 carbon atoms include a 2,6-bis(2,4,6-trimethylphenyl)phenoxy group, a 2,6-bis(2,4,6-triisopropylphenyl)phenoxy group, a 2,4,6-trimethylphenoxy group, a 2,3,5,6-tetraphenylphenoxy group, and the like. Examples of such groups in which the alkyl groups of R⁸ are bonded to each other include a 3,3'-di(t-butyl)-5,5',6,6'-tetramethyl-2,2'-biphenoxy group.

L⁴ is a neutral conjugated heterocyclic ligand having at least one nitrogen atom, that is, a 12- to 24-membered conjugated heterocyclic group. Specific examples of the neutral conjugated heterocyclic ligand having a nitrogen atom include pyridine, 2-methylpyridine, 2,4-lutidine, 2,6-lutidine, 2,2'-bipyridine, 5,5'-dimethyl-2,2'-bipyridyl, 4,4'-dimethyl-2,2'-bipyridyl, 4,4'-dibromo-2,2'-bipyridyl, 2,2'-biquinoline, 1,10-phenanthroline, and terpyridine. When a plurality of nitrogen atoms are included, the ligand can be a bidentate ligand rather than a monodentate ligand.

The conjugated heterocyclic group of L⁴ may have a substituent. Examples of the substituent include the same substituents as those enumerated above as the optional substituents of the conjugated heterocyclic group as L².

Specific examples of the compounds represented by general formula (5) include, but are not limited to, bis(1,1,1,3,3,3-hexafluoro-2-propoxy)neophylidenetungsten(VI) (2,6-dimethylphenylimido), bis(1,1,1,3,3,3-hexafluoro-2-propoxy)neophylidenemolybdenum(VI) (2,6-dimethylphenylimido), bis(1,1,1,3,3,3-hexafluoro-2-propoxy)neophylidenetungsten(VI) (2,6-diisopropylphenylimido), (2,3,5,6-tetraphenylphenoxy)2,6-dimethylphenylimidetungsten(VI) (2,5-dimethylpyrrolide)(neophylidene), {3,3'-di(t-butyl)-5,5',6,6'-tetramethyl-2,2'-biphenoxy}neophylidenemolybdenum(VI) (2,6-dimethylphenylimido), (2-trifluoromethyl-2-phenyl-1,1,1-trifluoroethoxy)2,6-dimethylphenylimidetungsten(VI) (2,5-dimethylpyrrolide)(neophylidene) (1,10-phenanthroline), (2-trifluoromethyl-2-phenyl-1,1,1-trifluoroethoxy)2,6-dimethylphenylimidetungsten(VI) (2,5-dimethylpyrrolide)(neophylidene)(2,2'-bipyridine), (2-trifluoromethyl-2-phenyl-1,1,1-trifluoroethoxy)phenylimidotungsten(VI) (2,5-dimethylpyrrolide)(neophylidene) (pyridine), and the like.

As a ruthenium-carbene complex, complex compounds represented by general formula (6) or general formula (7) below are preferred.

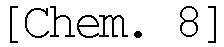

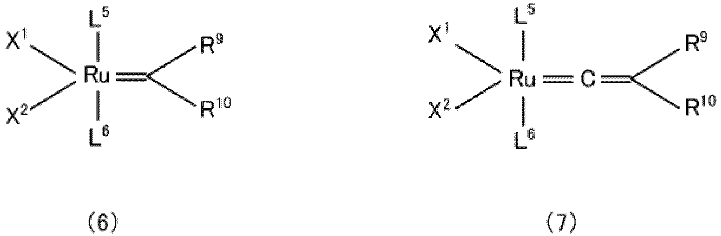

In general formulae (6) and (7) above, R⁹ and R¹⁰ are each independently a hydrogen atom; a halogen atom; or a hydrocarbon group having 1 to 20 carbon atoms optionally containing a halogen atom, an oxygen atom, a nitrogen atom, a sulfur atom, a phosphorus atom, or a silicon atom. X¹ and X² are each independently any anionic ligand, and L⁵ and L⁶ are each independently a heteroatom-containing carbene compound or a neutral electron-donating compound. R⁹, R¹⁰, X¹, X², L⁵, and L⁶ may be bonded to each other in any combination to form a multidentate chelating ligand. A "hetero atom" refers to an atom of Groups 15 and 16 of the periodic table, and specific examples thereof include N, O, P, S, As, and Se atoms, and the like. Among these, N, O, P, and S atoms are preferred, and an N atom is particularly preferred because a stable carbene compound can be obtained.

As a heteroatom-containing carbene compound, preferred is a carbene compound having adjacent heteroatoms bonded to both sides of the carbene carbon, and more preferred is a carbene compound having a heterocycle constituted by the carbene carbon atom and heteroatoms present at both sides thereof. The heteroatoms adjacent to the carbene carbon preferably have a bulky substituent. As the heteroatom-containing carbene compound, compounds represented by general formula (8) or (9) below are preferred.

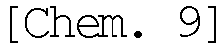

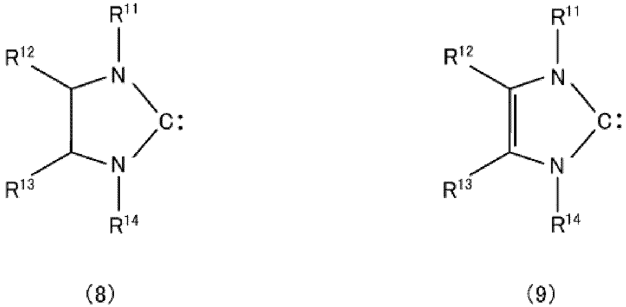

In general formulae (8) and (9) above, R¹³ to R¹⁶ are each independently a hydrogen atom; a halogen atom; or a hydrocarbon group having 1 to 20 carbon atoms optionally containing a halogen atom, an oxygen atom, a nitrogen atom, a sulfur atom, a phosphorus atom, or a silicon atom. R¹³ to R¹⁶ may be bonded to each other in any combination to form a multidentate chelating ligand.

In general formulae (6) and (7) above, anionic ligands X¹ and X² are ligands each having a negative charge when liberated from the central metal, and examples thereof include halogen atoms such as F, Cl, BR, and I; a diketonate group, substituted cyclopentadienyl groups, alkoxy groups, aryloxy groups, and a carboxyl group. Among these, halogen atoms are preferred, and a chlorine atom is more preferred.

The neutral electron-donating compound may be any ligand that has a neutral charge when liberated from the central metal, and examples thereof include carbonyls, amines, pyridines, ethers, nitriles, esters, phosphines, thioethers, aromatic compounds, olefins, isocyanides, thiocyanates, and the like. Among these, phosphines, ethers, and pyridines are preferred, and trialkylphosphine is more preferred.

Specific examples of the complex compound represented by general formulae (6) and (7) above include ruthenium complex compounds in which L⁵ and L⁶ are a heteroatom-containing carbene compound and a neutral electron-donating compound, respectively, such as benzylidene(1,3-dimesitylimidazolidin-2-ylidene)(tricyclohexylphosphine)ruthenium dichloride, (1,3-dimesitylimidazolidin-2-ylidene) (3-methyl-2-butene-1-ylidene)(tricyclopentylphosphine)ruthenium dichloride, benzylidene(1,3-dimesityl-2,3-dihydrobenzimidazol-2-ylidene)(tricyclohexylphosphine)ruthenium dichloride, and tricyclohexylphosphine[1,3-bis(2,4,6-trimethylphenyl)-4,5-dihydroimidazol-2-ylidene][3-methyl-2-butenylidene]ruthenium dichloride; ruthenium compounds in which L⁵ and L⁶ are both a neutral electron-donating compound, such as benzylidenebis(tricyclohexylphosphine)ruthenium dichloride, dichloro-(3-phenyl-1H-inden-1-ylidene)bis(tricyclohexylphosphine)ruthenium, and (3-methyl-2-buten-1-ylidene)bis(tricyclopentylphosphine)ruthenium dichloride; ruthenium complex compounds in which L⁵ and L⁶ are both a heteroatom-containing carbene compound, such as benzylidenebis(1,3-dicyclohexylimidazolidin-2-ylidene)ruthenium dichloride and benzylidenebis(1,3-diisopropyl-4-imidazolin-2-ylidene)ruthenium dichloride; and the like. Among these, preferred are ruthenium complex compounds in which L⁵ and L⁶ are a heteroatom-containing carbene compound and a neutral electron-donating compound, respectively.

Specific examples of the compounds represented by general formula (8) or (9) above include 1,3-dimethylimidazolidin-2-ylidene, 1,3-dimesityl-4-imidazolin-2-ylidene, 1,3-di(1-phenylethyl)-4-imidazolin-2-ylidene, 1,3-dimesityl-2,3-dihydrobenzimidazol-2-ylidene, and the like. In addition to the compounds represented by general formulae (8) and (9) above, for example, a heteroatom-containing carbene complex compound such as 1,3,4-triphenyl-2,3,4,5-tetrahydro-1H-1,2,4-triazol-5-ylidene or 1,3,4-triphenyl-4,5-dihydro-1H-1,2,4-triazol-5-ylidene can also be used.

These metathesis catalysts may be used alone or in combination.

In the production method according to the present invention, the amount of the metathesis catalyst used is preferably 0.001 to 10 parts by weight, more preferably 0.002 to 5 parts by weight, still more preferably 0.005 to 1 part by weight with respect to 100 parts by weight of the total of the polymer represented by general formula (2) above (first ethylenically unsaturated polymer) and the polymer represented by general formula (3) above (second ethylenically unsaturated polymer). When the amount of the metathesis catalyst used is within the above ranges, the randomness and the weight average molecular weight of the structural units that constitute the copolymer represented by general formula (1) obtained by the cross-metathesis reaction can be suitably controlled.

In addition, in the production method according to the present invention, the cross-metathesis reaction is preferably allowed to proceed in a solvent in a state where the polymer represented by general formula (2) above (first ethylenically unsaturated polymer), the polymer represented by general formula (3) above (second ethylenically unsaturated polymer), and a metathesis catalyst are dispersed or dissolved, and the cross-metathesis reaction may be allowed to proceed with stirring.

The solvent is not particularly limited as long as the solvent can disperse or dissolve the polymer represented by general formula (2) above (first ethylenically unsaturated polymer), the polymer represented by general formula (3) above (second ethylenically unsaturated polymer), and a metathesis catalyst. Examples thereof include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; haloalkanes such as dichloromethane and chloroform; aromatic halogens such as chlorobenzene and dichlorobenzene; and the like.

When the cross-metathesis reaction is allowed to proceed in a solvent in a state where the polymer represented by general formula (2) above (first ethylenically unsaturated polymer), the polymer represented by general formula (3) above (second ethylenically unsaturated polymer), and a metathesis catalyst are dispersed or dissolved, the reaction temperature is preferably 0 to 100°C, more preferably 10 to 80°C, more preferably 20 to 70°C, and the reaction time is preferably 1 minute to 100 hours, more preferably 10 minutes to 24 hours.

Optionally, a reaction-terminating agent is added to the reaction system to terminate the cross-metathesis reaction to afford a copolymer represented by general formula (1) as a polymer solution dispersed or dissolved in a solvent. The copolymer represented by general formula (1) can be isolated from the resulting polymer solution by a conventional method such as filtration, distillation, extraction, extractive distillation, absorption, or the like.

### <Filler>

The rubber composition according to the present invention is prepared by compounding the copolymer represented by general formula (1) above with a filler.

The filler can be either an organic filler or an inorganic filler, but is preferably a carbon material or silica.

When a carbon material is used as a filler, a cross-linked rubber having excellent wear resistance besides excellent fracture resistance, excellent wet grip properties, and reduced heat buildup can be produced, and thus, the resulting cross-linked rubber can be suitably used, for example, in heavy-load tire applications.

The carbon material is preferably carbon black. Examples of the carbon black include furnace black, acetylene black, thermal black, channel black, graphite, and the like. Among these, furnace black is preferable, and specific examples thereof include SAF, ISAF, ISAF-HS, ISAF-LS, IISAF-HS, HAF, HAF-HS, HAF-LS, FEF, and the like. These carbon blacks may be used alone or in combination.

The nitrogen adsorption specific surface area (N₂SA) of the carbon black is preferably from 5 to 200 m²/g, more preferably from 70 to 120 m²/g, and the dibutyl phthalate (DBP) adsorption amount is preferably from 5 to 300 ml/100g, more preferably from 80 to 160 ml/100g.

Examples of silica include dry process white carbon, wet process white carbon, colloidal silica, and precipitated silica disclosed in JP 62-62838 A. Preferred among these is wet process white carbon mainly composed of hydrous silicic acid. Further, a carbon-silica dual phase filler comprising carbon black and silica supported on the surface thereof may be used. These silicas may be used alone or in combination.

The nitrogen adsorption specific surface area of the silica (measured by the BET method in accordance with ASTM D3037-81) is preferably 50 to 400m²/g, more preferably 100 to 220m²/g. The pH of the silica is preferably less than 7, more preferably 5 to 6.9.

When silica is used as the filler, a silane coupling agent is preferably further mixed in order to further enhance the compatibility between the copolymer represented by general formula (1) above and the silica. Examples of the silane coupling agent include vinyltriethoxysilane, β-(3,4-epoxycyclohexyl)ethyltrimethoxysilane, N-(β-aminoethyl)-γ-aminopropyltrimethoxysilane, bis(3-(triethoxysilyl)propyl) tetrasulfide, and bis(3-(triethoxysilyl)propyl) disulfide; and tetrasulfides described in JP 6-248116 A, such as γ-trimethoxysilylpropyldimethylthiocarbamyl tetrasulfide and γ-trimethoxysilylpropylbenzothiazyl tetrasulfide. Among these, the tetrasulfides are preferable. These silane coupling agents may be used alone or in combination. The amount of the silane coupling agent to be added is preferably 0.1 to 30 parts by weight, more preferably 1 to 15 parts by weight with respect to 100 parts by weight of the silica.

The content of the filler in the rubber composition according to the present invention is preferably 10 to 150 parts by weight, more preferably 20 to 100 parts by weight, still more preferably 40 to 85 parts by weight with respect to 100 parts by weight of the rubber components containing the copolymer represented by general formula (1) above. When a carbon material is used as a filler, the content of the carbon material with respect to 100 parts by weight of the rubber components containing the copolymer represented by general formula (1) above is particularly preferably 40 to 60 parts by weight, and when silica is used as a filler, the content of silica with respect to 100 parts by weight of the rubber components containing the copolymer represented by general formula (1) above is particularly preferably 60 to 85 parts by weight.

The rubber composition according to the present invention may further contain a rubber other than the copolymer represented by general formula (1) above as a rubber component. Note that the rubber component in the present invention refers to the copolymer represented by general formula (1) above and a rubber other than the copolymer represented by general formula (1) above. Examples of such rubbers other than the copolymer represented by general formula (1) above include natural rubber (NR), polyisoprene rubber (IR), emulsion polymerized SBR (styrene-butadiene copolymer rubber), solution-polymerized random SBR (bound styrene: 5 to 50% by weight, 1,2-bond content in butadiene units: 10 to 80%), high trans SBR (trans bond content in butadiene units: 70 to 95%), low cis BR (polybutadiene rubber), high cis BR, high trans BR (trans bond content in butadiene units: 70 to 95%), ethylene-propylene-diene rubber (EPDM), styrene-isoprene copolymer rubber, butadiene-isoprene copolymer rubber, emulsion polymerized styrene-acrylonitrile-butadiene copolymer rubber, acrylonitrile-butadiene copolymer rubber, high vinyl SBR-low vinyl SBR block copolymer rubber, polyisoprene-SBR block copolymer rubber, polystyrene-polybutadiene-polystyrene block copolymer, acrylic rubber, epichlorohydrin rubber, fluororubber, silicon rubber, ethylene-propylene rubber, urethane rubber, and the like. Among these, NR, BR, IR, EPDM, and SBR are preferably used, and solution-polymerized random SBR is particularly preferably used. These rubbers can be used alone or in combination.

In the rubber composition according to the present invention, in addition to the above-mentioned components, necessary amounts of compounding agents such as a cross-linking agent, a cross-linking accelerator, a cross-linking activator, a filler other than the inorganic material, an antioxidant, an activator, a process oil, a plasticizer, and a lubricant may be added in a conventional manner.

Examples of the cross-linking agent include sulfurs such as powdered sulfur, precipitated sulfur, colloidal sulfur, insoluble sulfur, and highly dispersible sulfur; halogenated sulfurs such as sulfur monochloride and sulfur dichloride; organic peroxides such as dicumyl peroxide and ditertiary butyl peroxide; quinone dioximes such as p-quinone dioxime and p,p'-dibenzoylquinone dioxime; organic polyvalent amine compounds such as triethylenetetramine, hexamethylenediamine carbamate, and 4,4'-methylene bis-o-chloroaniline; alkylphenol resins having a methylol group; and the like. Among these, sulfurs are preferred, and powdered sulfur is more preferred. These cross-linking agents are used alone or in combination. The amount of the cross-linking agent to be added is preferably 0.1 to 15 parts by weight, more preferably 0.5 to 5 parts by weight with respect to 100 parts by weight of rubber components in the rubber composition.

Examples of the cross-linking accelerator include sulfenamide-based cross-linking accelerators such as N-cyclohexyl-2-benzothiazolylsulfenamide, N-(tert-butyl)-2-benzothiazolylsulfenamide, N-oxyethylene-2-benzothiazolylsulfenamide, N-oxyethylene-2-benzothiazolylsulfenamide, and N,N'-diisopropyl-2-benzothiazolylsulfenamide; guanidine-based cross-linking accelerators such as 1,3-diphenylguanidine, 1,3-di-ortho-tolylguanidine, and 1-ortho-tolylbiguanidine; thiourea-based cross-linking accelerators such as diethylthiourea; thiazole-based cross-linking accelerators such as 2-mercaptobenzothiazole, dibenzothiazyl disulfide, and zinc 2-mercaptobenzothiazole; thiuram-based cross-linking accelerators such tetramethylthiuram monosulfide and tetramethylthiuram disulfide; dithiocarbamic acid-based cross-linking accelerators such as sodium dimethyldithiocarbamate and zinc diethyldithiocarbamate; xanthogenic acid-based cross-linking accelerators such as sodium isopropyl xanthate, zinc isopropyl xanthate, and zinc butyl xanthate; and the like. Among these, those containing sulfenamide-based cross-linking accelerators are preferable, and those containing N-(tert-butyl)-2-benzothiazolylsulfenamide are particularly preferable. These cross-linking accelerators are used alone or in combination. The amount of the cross-linking accelerator to be added is preferably 0.1 to 15 parts by weight, more preferably 0.5 to 5 parts by weight with respect to 100 parts by weight of the rubber components in the rubber composition.

As the cross-linking activator, a higher fatty acid such as stearic acid, zinc oxide, or the like can be used. The amount of the cross-linking activator to be added can be appropriately selected. In the case of a higher fatty acid, the amount thereof to be added is preferably 0.05 to 15 parts by weight, more preferably 0.5 to 5 parts by weight with respect to 100 parts by weight of the rubber components in the rubber composition. In the case of zinc oxide, the amount thereof to be added is preferably 0.05 to 10 parts by weight, more preferably 0.5 to 3 parts by weight with respect to 100 parts by weight of the rubber components in the rubber composition.

As the process oil, a mineral oil or a synthetic oil may be used. As the mineral oil, an aroma oil, a naphthenic oil, a paraffin oil, or the like is typically used. Examples of other compounding agents include activators such as diethylene glycol, polyethylene glycol, and silicone oil; fillers other than the inorganic material, such as calcium carbonate, talc, and clay; tackifiers such as petroleum resin and coumarone resin; waxes; and the like.

The rubber composition according to the present invention can be obtained by kneading the components by an ordinary method. For example, the rubber composition can be obtained by kneading compounding agents other than the cross-linking agent and the cross-linking accelerator with the rubber component such as the copolymer represented by general formula (1) above, and then combining the kneaded product with the cross-linking agent and the cross-linking accelerator. The kneading temperature of the compounding agents other than the cross-linking agent and the cross-linking accelerator with the rubber components including the copolymer represented by general formula (1) above is preferably 20 to 200°C, more preferably 30 to 180°C, and the kneading time is preferably 30 seconds to 30 minutes. The cross-linking agent and the cross-linking accelerator are mixed at typically 100°C or lower, preferably at 80°C or lower.

### <Cross-linked rubber>

The cross-linked rubber according to the present invention is obtained by cross-linking the above-described rubber composition according to the present invention.

The cross-linked rubber according to the present invention can be produced using the rubber composition according to the present invention, for example, by molding with a molding machine enabling molding into a desired shape such as an extruding machine, an injection molding machine, a compressor, or a roll, performing a cross-linking reaction by heating, and fixing the shape as a cross-linked product. In this case, the cross-linking may be performed after the molding is performed beforehand or simultaneously with the molding. The molding temperature is typically 10 to 200°C, preferably 25 to 120°C. The cross-linking temperature is typically 100 to 200°C, preferably 130 to 190°C; the cross-linking time is typically 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked even when the surface thereof is cross-linked. To avoid this, the cross-linked rubber may be further heated for secondary cross-linking. As a heating method, a common method used to cross-link rubber such as press heating, steam heating, oven heating, or hot air heating can be appropriately selected.

The cross-linked rubber according to the present invention thus obtained is a product obtained by using the rubber composition according to the present invention described above, and thus has excellent fracture resistance, excellent wet grip properties, and reduced heat buildup. Accordingly, the cross-linked rubber according to the present invention can be suitably used in various applications such as, for example, materials for various tire parts such as cap treads, base treads, carcasses, sidewalls, and beads in tires; materials for various industrial-use products such as hoses, belts, mats, and antivibration rubber; rebound resilience improvers for resin; resin film cushioning materials; shoe soles; rubber shoes; golf balls; toys; and the like. Especially, the cross-linked rubber according to the present invention is suitable for materials for tires by virtue of its excellent fracture resistance, excellent wet grip properties, and reduced heat buildup. In addition, when the cross-linked rubber according to the present invention contains a carbon material as a filler constituting the rubber composition, the cross-linked rubber further has excellent wear resistance besides fracture resistance, wet grip properties, and reduced heat buildup, and thus can be suitably used as materials for heavy-load tires.

### EXAMPLES

The present invention is more specifically described by the following Examples and Comparative Examples, but the present invention is not limited to only these examples. The term "part(s)" refers to part(s) by mass unless otherwise indicated. Test methods used in Examples and Comparative Examples are as follows.

### <Molecular weights of polymers>

The weight average molecular weight (Mw) and the number average molecular weight (Mn) of each polymer were determined as values measured against polystyrene standards by using a gel permeation chromatography (GPC) system (product name "HLC-8220", available from Tosoh Corporation) with two H-type columns (product name "HZ-M", available from Tosoh Corporation) connected in series and a column temperature of 40°C using tetrahydrofuran as a solvent. In this measurement, a differential refractometer (product name "RI-8320", available from Tosoh Corporation) was used as a detector.

### <Ratio between norbornene compound-derived structural units and conjugated diene-derived structural units in cross metathesis copolymer>

The ratio between norbornene compound-derived structural units and conjugated diene-derived structural units in a cross metathesis copolymer was determined by ¹H-NMR and ¹³C-NMR.

### <Glass transition temperature (Tg) of polymer>

The glass transition temperature (Tg) of each polymer was determined by measurement using a differential scanning calorimeter (product name "X-DSC7000", available from Hitachi High-Tech Science Corporation) in a range from -150 to 100°C at a heating rate of 10°C/min.

### <Tensile test>

The rubber composition to be tested was cross-linked by pressing to prepare a sheet-shaped cross-linked rubber, which was punched out in the direction parallel to the grain direction to prepare a dumbbell-shaped test piece in the shape of dumbbell No. 6 defined in JIS K6251:2010. The tensile strength and elongation of the dumbbell-shaped test piece were measured by a tensile test using a tensile tester (product name "TENSOMETER 10K", available from ALPHA TECHNOLOGIES) as a testing machine at 23°C at 500 mm/min in accordance with JIS K 6251:2010. A higher tensile strength indicates better fracture resistance.

### <Rebound resilience test>

The rubber composition to be tested was press-formed using a mold while being pressurized to obtain a cylinder-shaped cross-linked rubber having a diameter of 29 mm and a thickness of 12.5 mm. The temperature of the resulting cylinder-shaped cross-linked rubber was controlled to 0°C or 60°C using a thermostat bath. The temperature-controlled cross-linked rubber was taken out from the thermostat bath, and immediately the rebound resilience of the cross-linked rubber was measured using a Lupke-type rebound resilience tester (available from Kobunshi Keiki Co., Ltd.) as a testing machine at 23°C at a holding force of 29 to 39 N in accordance with JIS K6255:1996. A lower rebound resilience at 0°C indicates better wet grip properties. A higher rebound resilience at 60°C indicates further reduced heat buildup.

### <Wet grip properties>

The cross-linkable rubber composition to be tested was cross-linked by pressing at 160°C for 20 minutes to prepare a test piece, and the tanδ at 0°C of the resulting test piece was measured using a dynamic viscoelasticity measurement device (product name "ARES", available from Rheometrics) at a dynamic strain of 0.5% and a frequency of 10Hz. In Examples 1 to 10, an index was calculated from the measurement result based on the measured value of the sample in Comparative Example 1 as 100. In Examples 11 to 20, an index was calculated from the measurement result based on the measured value of the sample in Comparative Example 3 as 100. A greater index indicates better wet grip properties.

### <Low heat buildup>

The cross-linkable rubber composition to be tested was cross-linked by pressing at 160°C for 20 minutes to prepare a test piece, and the tanδ at 60°C of the resulting test piece was measured using a dynamic viscoelasticity measurement device (product name "ARES", available from Rheometrics) at a dynamic strain of 2.0% and a frequency of 10Hz. In Examples 1 to 10, an index was calculated from the measurement result based on the measured value of the sample in Comparative Example 1 as 100. In Examples 11 to 20, an index was calculated from the measurement result based on the measured value of the sample in Comparative Example 3 as 100. A smaller index indicates further reduced heat buildup.

### <DIN wear test>

The cross-linkable rubber composition to be tested was press-formed using a mold under pressure to obtain a cylinder-shaped cross-linked rubber having a diameter of 16 mm and a thickness of 6 mm. The specific wear volume of the resulting cylinder-shaped cross-linked rubber was measured using a DIN wear tester (product name "AB-6110", available from Ueshima Seisakusho Co., Ltd.) as a testing machine in accordance with JIS K6264-2:2005 under the conditions where the test method was the method A, the additional force was 10 N, the wear distance was 40 m, the temperature was 23°C, and the reference test piece D1 was used. A smaller specific wear volume indicates a better wear resistance. Note that the DIN wear test was performed in Examples 1 to 10 and Comparative Examples 1 and 2.

### <Polymerization Example 1>

Under a nitrogen atmosphere, 100 parts of 2-norbornene (NB) as a norbornene compound, 567 parts of cyclohexane, and 0.065 parts of 1-hexene were placed in a glass reaction vessel equipped with a stirrer. Subsequently, 0.009 parts of dichloro-(3-phenyl-1H-inden-1-ylidene)bis(tricyclohexylphosphine)ruthenium(II) dissolved in 10 parts of toluene was added thereto to cause a polymerization reaction at room temperature for 2 hours. After the polymerization reaction, an excess of vinyl ethyl ether was added to terminate the polymerization reaction. Then, the resulting polymer solution was poured into a large excess of methanol containing 2,6-di-t-butyl-p-cresol (BHT), and the precipitated polymer was collected, washed with methanol, and then vacuum dried at 50°C for 3 days to afford 100 parts of a ring-opened copolymer (2-A). The number average molecular weight (Mn) of the resulting ring-opened copolymer (2-A) was 340,000, the weight average molecular weight (Mw) was 885,000, the glass transition temperature (Tg) was 35°C, and the content of unsaturated bond carbon was 28.6 mol%. The content of unsaturated bond carbon was determined by ¹H-NMR.

### <Polymerization Example 2>

Under a nitrogen atmosphere, 100 parts of 2-norbornene (NB) as a norbornene compound, 567 parts of cyclohexane, and 0.35 parts of 1-hexene were placed in a glass reaction vessel equipped with a stirrer. Subsequently, 0.009 parts of dichloro-(3-phenyl-1H-inden-1-ylidene)bis(tricyclohexylphosphine)ruthenium(II) dissolved in 10 parts of toluene was added thereto to cause a polymerization reaction at room temperature for 2 hours. After the polymerization reaction, an excess of vinyl ethyl ether was added to terminate the polymerization reaction. Then, the resulting polymer solution was poured into a large excess of methanol containing 2,6-di-t-butyl-p-cresol (BHT), and the precipitated polymer was collected, washed with methanol, and then vacuum dried at 50°C for 3 days to afford 100 parts of a ring-opened copolymer (2-B). The number average molecular weight (Mn) of the resulting ring-opened copolymer (2-B) was 95,200, the weight average molecular weight (Mw) was 233,000, the glass transition temperature (Tg) was 35°C, and the content of unsaturated bond carbon was 28.6 mol%.

### <Polymerization Example 3>

Under a nitrogen atmosphere, 100 parts of dicyclopentadiene (DCPD) as a norbornene compound, 567 parts of cyclohexane, and 0.070 parts of 1-hexene were placed in a glass reaction vessel equipped with a stirrer. Subsequently, 0.025 parts of dichloro[1,3-bis(2,4,6-trimethylphenyl)-2-imidazolidinylidene](benzylidene)(tricyclohexylphosphine)ruthenium(II) dissolved in 10 parts of toluene was added thereto to cause a polymerization reaction at room temperature for 30 minutes. After the polymerization reaction, an excess of vinyl ethyl ether was added to terminate the polymerization reaction. Then, the resulting polymer solution was poured into a large excess of methanol containing 2,6-di-t-butyl-p-cresol (BHT), and the precipitated polymer was collected, washed with methanol, and then vacuum dried at 50°C for 3 days to afford 100 parts of a ring-opened copolymer (2-C). The number average molecular weight (Mn) of the resulting ring-opened copolymer (2-C) was 125,000, the weight average molecular weight (Mw) was 268,000, the glass transition temperature (Tg) was 151°C, and the content of unsaturated bond carbon was 40.0 mol%.

### <Polymerization Example 4>

100 Parts of a ring-opened copolymer (2-D) was obtained in the same manner as in Polymerization Example 3 except that 50 parts of dicyclopentadiene (DCPD) and 50 parts of 2-norbornene (NB) were used as norbornene compounds. The number average molecular weight (Mn) of the resulting ring-opened copolymer (2-D) was 199,000, the weight average molecular weight (Mw) was 439,000, the ratio of dicyclopentadiene structural units/norbornene structural units was 50/50 (weight ratio), the glass transition temperature (Tg) was 83°C, and the content of unsaturated bond carbon was 33.3 mol%.

### <Polymerization Example 5>

100 Parts of a ring-opened copolymer (2-E) was obtained in the same manner as in Polymerization Example 3 except that 100 parts of tetracyclo[6.2.1.1^{3,6}.0^{2,7}]dodec-4-ene (tetracyclododecene, TCD) was used as a norbornene compound. The number average molecular weight (Mn) of the resulting ring-opened copolymer (2-E) was 129,000, the weight average molecular weight (Mw) was 277,000, the glass transition temperature (Tg) was 200°C, and the content of unsaturated bond carbon was 16.7 mol%.

### <Polymerization Example 6>

100 Parts of a ring-opened copolymer (2-F) was obtained in the same manner as in Polymerization Example 3 except that 100 parts of 1,4-methano-1,4,4a,9a-tetrahydro-9H-fluorene (MTHF) was used as a norbornene compound. The number average molecular weight (Mn) of the resulting ring-opened copolymer (2-F) was 128,000, the weight average molecular weight (Mw) was 275,000, the glass transition temperature (Tg) was 201°C, and the content of unsaturated bond carbon was 14.3 mol%.

### <Polymerization Example 7>

Under a nitrogen atmosphere, 599 parts of 2-norbornene (NB) as a norbornene compound, 703 parts of cyclopentene (CPE) as a monocyclic olefin, 2411 parts of toluene, and 1.05 parts of 1-hexene were placed in a glass reaction vessel equipped with a stirrer. Subsequently, 0.154 parts of dichloro-(3-phenyl-1H-inden-1-ylidene)bis(tricyclohexylphosphine)ruthenium(II) dissolved in 35 parts of toluene was added thereto to cause a polymerization reaction at room temperature for 3 hours. After the polymerization reaction, an excess of vinyl ethyl ether was added to terminate the polymerization reaction. Then, the resulting polymer solution was poured into a large excess of methanol containing 2,6-di-t-butyl-p-cresol (BHT), and the precipitated polymer was collected, washed with methanol, and then vacuum dried at 50°C for 3 days to afford 833 parts of a ring-opened copolymer (1'-K). The number average molecular weight (Mn) of the resulting ring-opened copolymer (1'-K) was 127,000, the weight average molecular weight (Mw) was 234,000, the ratio of 2-norbornene structural units/cyclopentene structural units was 62/38 (weight ratio), the glass transition temperature (Tg) was -23°C, and the content of unsaturated bond carbon was 33.8 mol%.

### <Polymerization Example 8>

Under a nitrogen atmosphere, 45 parts of dicyclopentadiene (DCPD) as a norbornene compound, 55 parts of cyclopentene (CPE) as a monocyclic olefin, 233 parts of toluene, and 0.08 parts of 1-hexene were placed in a glass reaction vessel equipped with a stirrer. Subsequently, 0.011 parts of dichloro-(3-phenyl-1H-inden-1-ylidene)bis(tricyclohexylphosphine)ruthenium(II) dissolved in 6 parts of toluene was added thereto to cause a polymerization reaction at room temperature for 3 hours. After the polymerization reaction, an excess of vinyl ethyl ether was added to terminate the polymerization reaction. Then, the resulting polymer solution was poured into a large excess of methanol containing 2,6-di-t-butyl-p-cresol (BHT), and the precipitated polymer was collected, washed with methanol, and then vacuum dried at 50°C for 3 days to afford 833 parts of a ring-opened copolymer (1'-L). The number average molecular weight (Mn) of the resulting ring-opened copolymer (1'-L) was 119,000, the weight average molecular weight (Mw) was 238,000, the ratio of the weight average molecular weight (Mw) to the number average molecular weight (Mn) (Mw/Mn) was 2.00, the ratio of dicyclopentadiene structural units/cyclopentene structural units was 55/45 (weight ratio), the glass transition temperature (Tg) was -25°C, and the content of unsaturated bond carbon was 40.0 mol%.

### <Polymerization Example 9>

An autoclave with an inner volume of 2000 ml equipped with a stirrer was charged with 2.0 × 10⁻⁵ mol of cobalt octenoate, and 162.3 g of 1,3-butadiene, 900 ml of benzene, and 0.18 g of 1,5-cyclooctadiene were added thereto, and then 8.0 × 10⁻⁴ mol of water was added. Further, 10 ml of a benzene solution containing 2.7 × 10⁻³ mol of diethylaluminum chloride was added with stirring to cause a polymerization reaction at 50°C for 2 hours. The polymerization reaction was terminated by adding 20 ml of methanol, the resulting polymer solution was poured into 5000 ml of methanol, and the precipitated polymer was filtered, and dried. Further, the resulting polymer was dissolved in 1500 ml of toluene, the resulting polymer solution was poured into 5000 ml of methanol, and the precipitated polymer was filtered, and dried to afford polybutadiene rubber (3-A) . The yield of the polymer was 85%. In the resulting polybutadiene rubber (3-A), the vinyl bond content was 0.2 mol% and the content of unsaturated bond carbon was 50.0 mol%.

### <Polymerization Example 10>

Under a nitrogen atmosphere, 0.81 parts of (C₅Me₄iPr)₂Sm- (THF) as a polymerization catalyst, 0.15 mol of modified methylaluminoxane, and 462 parts of cyclohexane were placed in a glass reaction vessel equipped with a stirrer. Subsequently, 100 parts of 1,3-butadiene was added thereto to cause a polymerization reaction at 50°C for 30 minutes. The resulting polymer solution was poured into a large excess of methanol containing 2,6-di-t-butyl-p-cresol (BHT), the precipitated polymer was collected, washed with methanol, and then vacuum dried at 50°C for 3 days to afford 98 parts of polybutadiene rubber (3-C). The number average molecular weight (Mn) of the resulting polybutadiene rubber (3-C) was 132,000, the weight average molecular weight (Mw) was 278,000, the glass transition temperature (Tg) was -90°C, the amount of vinyl bond was 0.7 mol%, and the content of unsaturated bond carbon was 50.0 mol%.

### <Example 1>

### (Synthesis of cross metathesis copolymer (1-A))

Under a nitrogen atmosphere, 116 parts of the ring-opened copolymer (2-A) obtained in Polymerization Example 1, 84 parts of polybutadiene rubber (3-A) obtained in Polymerization Example 9, and 1611 parts of toluene was placed and dissolved in a glass reaction vessel equipped with a stirrer. Subsequently, 0.91 parts of dichloro[1,3-bis(2,4,6-trimethylphenyl)-2-imidazolidinylidene](benzylidene)(tricyclohexylphosphine)ruthenium(II) dissolved in 10 parts of toluene was added thereto to cause a cross-metathesis reaction with stirring at room temperature for 24 hours. After the reaction, an excess of vinyl ethyl ether was added to terminate the reaction. The resulting cross-metathesis reaction solution was poured into a large excess of methanol containing 2,6-di-t-butyl-p-cresol (BHT), and the precipitated polymer was collected, washed with methanol, and then vacuum dried at 50°C for 3 days to afford 164 parts of a cross metathesis copolymer (1-A). The number average molecular weight (Mn) of the resulting cross metathesis copolymer (1-A) was 129,000, the weight average molecular weight (Mw) was 248,000, the ratio of 2-norbornene structural units/butadiene structural units was 61/39 (weight ratio), and the glass transition temperature (Tg) was -25°C. The cross metathesis copolymer (1-A) was a copolymer represented by general formula (1) above where p = 837 and n = 932. The values of p and n were determined based on the weight ratio of the structural units and the weight average molecular weight of the copolymer.

### (Preparation of cross-linkable rubber composition)

100 parts of a cross metathesis copolymer (1-A) obtained above, 50 parts of carbon black (trade name "SEAST 9H", available from TOKAI CARBON CO., LTD.), 3 parts of zinc oxide (zinc flower No. 1), 2.0 parts of stearic acid (trade name "SA-300", available from ADEKA CORPORATION), and 2.0 parts of N-phenyl-N'-(1,3-dimethylbutyl)-p-phenylenediamine (trade name "NOCLAC 6C", available from OUCHI SHINKO CHEMICAL INDUSTRIAL CO., LTD., an antioxidant) were placed in a Banbury mixer, then the resulting mixture was kneaded at a starting temperature of 80°C for 4 minutes, and the resulting rubber composition was discharged from the Banbury mixer. When the kneading was completed, the temperature of the rubber composition was 160°C. The resulting rubber composition was kneaded with 1.75 parts of sulfur and 1 part of N-cyclohexylbenzothiazole-2-sulfen (trade name "NOCCELER CZ-G (CZ)", available from OUCHI SHINKO CHEMICAL INDUSTRIAL CO., LTD., a cross-linking accelerator) using open rolls at 50°C to form a sheet-shaped cross-linkable rubber composition.

Using the resulting cross-linkable rubber composition, the measurements described above were performed. The results are shown in Table 1.

### <Example 2>

### (Synthesis of cross metathesis copolymer (1-B))

147 Parts of a cross metathesis copolymer (1-B) was obtained in the same manner as in Synthesis Example 1 except that 116 parts of the ring-opened copolymer (2-B) obtained in Polymerization Example 2 was used instead of 116 parts of the ring-opened copolymer (2-A) obtained in Polymerization Example 1. The number average molecular weight (Mn) of the resulting cross metathesis copolymer (1-B) was 75,300, the weight average molecular weight (Mw) was 147,000, the ratio of 2-norbornene structural units/butadiene structural units was 63/37 (weight ratio), and the glass transition temperature (Tg) was -25°C. The cross metathesis copolymer (1-B) was a copolymer represented by general formula (1) above where p = 504 and n = 516.

### (Preparation of cross-linkable rubber composition)

A cross-linkable rubber composition was prepared in the same manner as in Example 1 except that 100 parts of the cross metathesis copolymer (1-B) obtained above was used, and the measurements were performed in the same manner as above. The results are shown in Table 1.

### <Example 3>

### (Synthesis of cross metathesis copolymer (1-C))

154 Parts of a cross metathesis copolymer (1-C) was obtained in the same manner as in Example 1 except that 96 parts of the ring-opened copolymer (2-C) polymerized in Polymerization Example 3 was used instead of 116 parts of the ring-opened copolymer (2-A) polymerized in Polymerization Example 1 and the amount of the polybutadiene (3-A) used was 104 parts. The number average molecular weight (Mn) of the resulting cross metathesis copolymer (1-C) was 130,000, the weight average molecular weight (Mw) was 251,000, the ratio of dicyclopentadiene structural units/butadiene structural units was 48/52 (weight ratio), and the glass transition temperature (Tg) was -22°C. The cross metathesis copolymer (1-C) was a copolymer represented by general formula (1) above where p = 472 and n = 1252.

### (Preparation of cross-linkable rubber composition)

A cross-linkable rubber composition was prepared in the same manner as in Example 1 except that 100 parts of the cross metathesis copolymer (1-C) obtained above was used, and the measurements were performed in the same manner as above. The results are shown in Table 1.

### <Example 4>

### (Synthesis of cross metathesis copolymer (1-D))

152 Parts of a cross metathesis copolymer (1-D) was obtained in the same manner as in Example 3 except that 96 parts of the ring-opened copolymer (2-D) polymerized in Polymerization Example 4 was used instead of 96 parts of the ring-opened copolymer (2-C) polymerized in Polymerization Example 3. The number average molecular weight (Mn) of the resulting cross metathesis copolymer (1-D) was 121,000, the weight average molecular weight (Mw) was 244,000, the ratio of 2-norbornene structural units/dicyclopentadiene structural units/butadiene structural units was 27/27/44 (weight ratio), and the glass transition temperature (Tg) was -23°C. The cross metathesis copolymer (1-D) was a copolymer represented by general formula (1) above where p = 595 and n = 986.

### (Preparation of cross-linkable rubber composition)

A cross-linkable rubber composition was prepared in the same manner as in Example 1 except that 100 parts of the cross metathesis copolymer (1-D) obtained above was used, and the measurements were performed in the same manner as above. The results are shown in Table 1.

### <Example 5>

### (Synthesis of cross metathesis copolymer (1-E))

147 Parts of a cross metathesis copolymer (1-E) was obtained in the same manner as in Example 3 except that 96 parts of the ring-opened copolymer (2-E) polymerized in Polymerization Example 5 was used instead of 96 parts of the ring-opened copolymer (2-C) polymerized in Polymerization Example 3. The number average molecular weight (Mn) of the resulting cross metathesis copolymer (1-E) was 119,000, the weight average molecular weight (Mw) was 241,000, the ratio of tetracyclododecene structural units/butadiene structural units was 44/56 (weight ratio), and the glass transition temperature (Tg) was -23°C. The cross metathesis copolymer (1-E) was a copolymer represented by general formula (1) above where p = 327 and n = 1234.

### (Preparation of cross-linkable rubber composition)

A cross-linkable rubber composition was prepared in the same manner as in Example 1 except that 100 parts of the cross metathesis copolymer (1-E) obtained above was used, and the measurements were performed in the same manner as above. The results are shown in Table 1.

### <Example 6>

### (Synthesis of cross metathesis copolymer (1-F))

147 Parts of a cross metathesis copolymer (1-F) was obtained in the same manner as in Example 3 except that 96 parts of the ring-opened copolymer (2-F) polymerized in Polymerization Example 6 was used instead of 96 parts of the ring-opened copolymer (2-C) polymerized in Polymerization Example 3. The number average molecular weight (Mn) of the resulting cross metathesis copolymer (1-F) was 117,000, the weight average molecular weight (Mw) was 239,000, the ratio of 1,4-methano-1,4,4a,9a-tetrahydro-9H-fluorene (MTHF) structural units/butadiene structural units was 43/57 (weight ratio), and the glass transition temperature (Tg) was -24°C. The cross metathesis copolymer (1-F) was a copolymer represented by general formula (1) above where p = 202 and n = 1235.

### (Preparation of cross-linkable rubber composition)

A cross-linkable rubber composition was prepared in the same manner as in Example 1 except that 100 parts of the cross metathesis copolymer (1-F) obtained above was used, and the measurements were performed in the same manner as above. The results are shown in Table 1.

### <Example 7>

### (Synthesis of cross metathesis copolymer (1-G))

147 Parts of a cross metathesis copolymer (1-G) was obtained in the same manner as in Example 1 except that 84 parts of polybutadiene rubber (3-B) (trade name "Nipol (registered trademark) BR 1250H", available from Zeon Corporation, the amount of vinyl bond: 10 mol%) was used instead of 84 parts of polybutadiene rubber (3-A) . The number average molecular weight (Mn) of the resulting cross metathesis copolymer (1-G) was 128,000, the weight average molecular weight (Mw) was 238,000, the ratio of 2-norbornene structural units/butadiene structural units was 62/38 (weight ratio), and the glass transition temperature (Tg) was -24°C. The cross metathesis copolymer (1-G) was a copolymer represented by general formula (1) above where p = 844 and n = 901.

### (Preparation of cross-linkable rubber composition)

A cross-linkable rubber composition was prepared in the same manner as in Example 1 except that 100 parts of the cross metathesis copolymer (1-G) obtained above was used, and the measurements were performed in the same manner as above. The results are shown in Table 1.

### <Example 8>

### (Synthesis of cross metathesis copolymer (1-H))

147 Parts of a cross metathesis copolymer (1-H) was obtained in the same manner as in Example 1 except that 84 parts of polybutadiene rubber (3-C) obtained in Polymerization Example 10 was used instead of 84 parts of polybutadiene rubber (3-A). The number average molecular weight (Mn) of the resulting cross metathesis copolymer (1-H) was 130,000, the weight average molecular weight (Mw) was 242,000, the ratio of 2-norbornene structural units/butadiene structural units was 61/39 (weight ratio), and the glass transition temperature (Tg) was -25°C. The cross metathesis copolymer (1-H) was a copolymer represented by general formula (1) above where p = 844 and n = 939.

### (Preparation of cross-linkable rubber composition)

A cross-linkable rubber composition was prepared in the same manner as in Example 1 except that 100 parts of the cross metathesis copolymer (1-H) obtained above was used, and the measurements were performed in the same manner as above. The results are shown in Table 1.

### <Example 9>

### (Synthesis of cross metathesis copolymer (1-I))

147 Parts of a cross metathesis copolymer (1-I) was obtained in the same manner as in Example 1 except that 84 parts of natural rubber (3-D) was used instead of 84 parts of polybutadiene rubber (3-A). The number average molecular weight (Mn) of the resulting cross metathesis copolymer (1-I) was 133,000, the weight average molecular weight (Mw) was 252,000, the ratio of norbornene structural units/natural rubber structural units was 60/40 (weight ratio), and the glass transition temperature (Tg) was -23°C. The cross metathesis copolymer (1-I) was a copolymer represented by general formula (1) above where p = 849 and n = 782.

### (Preparation of cross-linkable rubber composition)

A cross-linkable rubber composition was prepared in the same manner as in Example 1 except that 100 parts of the cross metathesis copolymer (1-I) obtained above was used, and the measurements were performed in the same manner as above. The results are shown in Table 1.

### <Example 10>

### (Synthesis of cross metathesis copolymer (1-J))

165 parts of a cross metathesis copolymer (1-J) was obtained in the same manner as in Example 1 except that the amount of the ring-opened copolymer (2-A) polymerized in Polymerization Example 1 used was 96 parts and the amount of the polybutadiene rubber (3-A) used was 114 parts. The number average molecular weight (Mn) of the resulting cross metathesis copolymer (1-J) was 133,000, the weight average molecular weight (Mw) was 249,000, the ratio of 2-norbornene structural units/butadiene structural units was 44/56 (weight ratio), and the glass transition temperature (Tg) was -47°C. The cross metathesis copolymer (1-J) was a copolymer represented by general formula (1) above where p = 623 and n = 1379.

### (Preparation of cross-linkable rubber composition)

A cross-linkable rubber composition was prepared in the same manner as in Example 1 except that 100 parts of the cross metathesis copolymer (1-J) obtained above was used, and the measurements were performed in the same manner as above. The results are shown in Table 1.

### <Comparative Example 1>

A cross-linkable rubber composition was prepared in the same manner as in Example 1 except that 100 parts of the ring-opened copolymer (1'-K) obtained in Polymerization Example 7 was used instead of 100 parts of the cross metathesis copolymer (1-A), and the measurements were performed in the same manner as above. The results are shown in Table 1.

### <Comparative Example 2>

A cross-linkable rubber composition was prepared in the same manner as in Example 1 except that 100 parts of the ring-opened copolymer (1'-L) obtained in Polymerization Example 8 was used instead of 100 parts of the cross metathesis copolymer (1-A), and the measurements were performed in the same manner as above. The results are shown in Table 1.

### [Table 1]

**Table 1**

| | Polymers used for cross-metathesis reaction | Rubber component | | | Type of filler | Tensile strength [MPa] | Elongation [%] | Rebound resilience at 0°C [%] | Rebound resilience at 60°C [%] | Wet grip properties | Low heat buildup | Specific wear volume [mm³] |
|---|---|---|---|---|---|---|---|---|---|---|---|---|
| | | Type | Mw | Tg [°C] | | | | | | | | |
| Example 1 | Ring-opened copolymer (2-A) Polybutadiene rubber (3-A) | Cross metathesis copolymer(1-A) (2-Norbornene structural units/Butadene structural units = 61/39) : | 248,000 | -25 | Carbon black | 38.7 | 530 | 10 | 58 | 106 | 95 | 40 |
| Example 2 | Ring-opened copolymer (2-B) Polybutadiene rubber (3-A) | Cross metathesis copolymer(1-B) (2-Norbornene structural units/Butadene structural units = 63/37) | 147,000 | -25 | Carbon black | 37.3 | 480 | 9 | 52 | 105 | 98 | 44 |
| Example 3 | Ring-opened copolymer (2-C) Polybutadiene rubber (3-A) | Cross metathesis copoly mer(1-C) (Dicy clopentadiene structural units/Butadiene structural units = 48/52) | 251,000 | -22 | Carbon black | 37.9 | 500 | 11 | 58 | 105 | 94 | 41 |
| Example 4 | Ring-opened copolymer (2-D) Polybutadiene rubber (3-A) | Cross metathesis copolymer(1-D) (2-Norbornene structural units/Dicyclopentadiene structural units/Butadiene structural units = 27/27/44) | 244,000 | -23 | Carbon black | 38.2 | 510 | 10 | 59 | 105 | 96 | 41 |
| Example 5 | Ring-opened copolymer (2-E) Polybutadiene rubber (3-A) | Cross metathesis copoly mer (1-E) (Tetracyclododecene structural units/Butadiene structural units = 44/56) | 241,000 | -23 | Carbon black | 37.7 | 500 | 11 | 59 | 104 | 94 | 42 |
| Example 6 | Ring-opened copoly mer (2-F) Polybutadiene rubber (3-A) | Cross metathesis copolymer (1-F) (MTHF structural units/Butadiene structural units = 43/57) | 239,000 | -24 | Carbon black | 38.1 | 490 | 12 | 58 | 104 | 95 | 42 |
| Example 7 | Ring-opened copolymer (2-A) Polybutadiene rubber (3-B) | Cross metathesis copolymer(1-G) (2-Norbornene structural units/Butadiene structural units = 62/38) | 238,000 | -24 | Carbon black | 37.5 | 510 | 10 | 59 | 106 | 94 | 43 |
| Example 8 | Ring-opened copolymer (2-A) Polybutadiene rubber (3-C) | Cross metathesis copolymer(1-H) (2-Norbornene structural units/Butadene structural units = 61/39) | 242,000 | -25 | Carbon black | 38.5 | 500 | 9 | 58 | 106 | 95 | 40 |
| Example 9 | Ring-opened copolymer (2-A) Natural rubber (3-D) | Cross metathesis copolymer (1-I) (2-Norbornene structural urits/Natural rubber structural units = 60/40) | 252,000 | -23 | Carbon black | 37.9 | 480 | 11 | 57 | 104 | 97 | 42 |
| Example 10 | Ring-opened copolymer (2-A) Polybutadiene rubber (3-A) | Cross metathesis copolymer (1-J) (2-Norbornene structural units/Butadene structural units = 44/56) | 249,000 | -47 | Carbon black | 38.7 | 520 | 11 | 58 | 106 | 95 | 41 |
| Comp. Ex. 1 | - | Ring-opened copoty mer (1'aC) (2-Norbornene structural units/Cyclopentene structural unts = 62/38) ; | 234,000 | -23 | Carbon black | 37.1 | 430 | 23 | 42 | 100 | 100 | 46 |
| Comp. Ex 2 | - | Ring-opened copolymer (1'-L) (Dicyclopentadiene structural units/Cyclopentene structural units = 55/45) | 238,000 | -25 | Carbon black | 28 | 270 | 28 | 40 | 99 | 101 | 68 |

As shown in Table 1, when the rubber compositions each containing the copolymer represented by general formula (1) above and a filler were used to prepare cross-linked rubbers, the resulting cross-linked rubbers had excellent tensile strength, excellent fracture resistance, excellent grip properties, and reduced heat buildup. Furthermore, since a carbon material was used as the filler, the cross-linked rubbers also had excellent wear resistance (Examples 1 to 10).

On the other hand, when a ring-opened copolymer of a norbornene compound and cyclopentene was used instead of the copolymer represented by general formula (1) above, the resulting cross-linked rubber had low tensile strength, insufficient fracture resistance, insufficient wet grip properties and unsatisfactory heat buildup (Comparative Examples 1 and 2).

### <Example 11>

100 Parts of the cross metathesis copolymer (1-A) obtained in Example 1, 50 parts of silica (trade name "Zeosil 1165MP", available from Rhodia, nitrogen adsorption specific surface area (the BET method): 163m²/g), 10 parts of process oil (trade name "AROMAX T-DAE", available from Nippon Oil Corporation), and 6.0 parts of a silane coupling agent (bis(3-(triethoxysilyl)propyl) tetrasulfide, trade name "Si69", available from Degussa) were placed in a Banbury mixer, and the resulting mixture was kneaded at a starting temperature of 110°C for 1.5 minutes. Subsequently, 25 parts of silica (trade name "Zeosil 1165MP", available from Rhodia), 3 parts of zinc oxide (zinc flower No. 1), 2.0 parts of stearic acid (trade name "SA-300", available from ADEKA CORPORATION), and 2.0 parts of an antioxidant (N-phenyl-N'-(1,3-dimethylbutyl)-p-phenylenediamine, trade name "NOCLAC 6C", available from OUCHI SHINKO CHEMICAL INDUSTRIAL CO., LTD.) were added to the kneaded product, then the resulting mixture was kneaded for 2.5 minutes, and the resulting rubber composition was discharged from the Banbury mixer. When the kneading was completed, the temperature of the rubber composition was 150°C. The rubber composition was cooled to room temperature, then kneaded in the Banbury mixer for another 3 minutes, and then the rubber composition was discharged from the Banbury mixer. Subsequently, the resulting rubber composition was kneaded with 1.5 parts of sulfur and a cross-linking accelerator (a mixture of 1.8 parts of N-t-butyl-2-benzothiazolesulfenamide (trade name "NOCCELER NS", available from OUCHI SHINKO CHEMICAL INDUSTRIAL CO., LTD.) and 1.5 parts of diphenylguanidine (trade name "NOCCELER D", available from OUCHI SHINKO CHEMICAL INDUSTRIAL CO., LTD.)) using open rolls at 50°C to form a sheet-shaped cross-linkable rubber composition.

Using the resulting cross-linkable rubber composition, the measurements described above were performed. The results are shown in Table 2.

### <Examples 12 to 20>

Cross-linkable rubber compositions were prepared in the same manner as in Example 1 except that the cross metathesis copolymers (1-B) to (1-J) synthesized in Examples 2 to 10 were used in an amount of 100 parts, respectively, instead of 100 parts of the cross metathesis copolymer (1-A), and the measurements were performed in the same manner as above. The results are shown in Table 2.

### <Comparative Example 3>

A cross-linkable rubber composition was prepared in the same manner as in Example 11 except that 100 parts of the ring-opened copolymer (1'-K) obtained in Polymerization Example 7 was used instead of 100 parts of the cross metathesis copolymer (1-A), and the measurements were performed in the same manner as above. The results are shown in Table 2.

### <Comparative Example 4>

A cross-linkable rubber composition was prepared in the same manner as in Example 11 except that 100 parts of the ring-opened copolymer (1'-L) obtained in Polymerization Example 8 was used instead of 100 parts of the cross metathesis copolymer (1-A), and the measurements were performed in the same manner as above. The results are shown in Table 2.

### [Table 2]

**Table 2**

| | Polymers used for cross-metathesis reaction | Rubbercomponent | | | Type of filler | Tensile strength [MPa] | Elongation [%] | Rebound resilience at 0°C [%] | Rebound resilience at 60°C [%] | Wet grip properties | Low heat buildup |
|---|---|---|---|---|---|---|---|---|---|---|---|
| | | Type | Mw | Tg [°C] | | | | | | | |
| Example 11 | Ring-opened copolymer (2-A) Polybutadiene rubber (3-A) | Cross metathesis copolymer (1-A) (2-Norbornene structural units/Butadiene structural units =61/39) | 248,000 | -25 | Siica | 38.9 | 550 | 8 | 60 | 105 | 94 |
| Example 12 | Ring-opened copolymer (2-B) Polybutadiene rubber (3-A) | Cross metathesis copolymer (1-B) (2-Norbornene structural units/Butadiene structural units =63/37) | 147,000 | -25 | Siica | 37.6 | 490 | 7 | 53 | 105 | 98 |
| Example 13 | Ring-opened copolymer (2-C) Polybutadiene rubber (3-A) | Cross metathesis copolymer (1-C) (Dicyclopertadiene structural units/Butadiene structural units = 48/52) | 251,000 | -22 | Siica | 37.8 | 520 | 10 | 59 | 104 | 95 |
| Example 14 | Ring-opened copolymer (2-D) Polybutadiene rubber (3-A) | Cross metathesis copolymer (1-D) (2-Norbomene structural units/Dicyclopentadiene structural units/Butadiene : structural units = 27/27/44) | 244,000 | -23 | Siica | 37.9 | 530 | 9 | 59 | 104 | 97 |
| Example 15 | Ring-opened copolymer (2-E) Polybutadiene rubber (3-A) | Cross metathesis copolymer (1-E) (Tetracyclododecene structural units/Butadiene structural units = 44/56) | 241,000 | -23 | Siica | 38 | 510 | 10 | 60 | 103 | 96 |
| Example 16 | Ring-opened copolymer (2-F) Polybutadiene rubber (3-A) | Cross metathesis copolymer (1-F) (MTHF structural units/Butadiene structural units = 43/57) | 239.000 | -24 | Siica | 38.2 | 500 | 11 | 58 | 103 | 95 |
| Example 17 | Ring-opened copolymer (2-A) Polybutadiene rubber (3-B) | Cross metathesis copolymer (1-G) (2-Norbornene structural units/Butadiene structural units = 62/38) | 238,000 | -24 | Siica | 37.8 | 510 | 10 | 60 | 104 | 96 |
| Example 18 | Ring-opened copolymer (2-A) Polybutadiene rubber (3-C) | Cross metathesis copolymer (1-H) (2-Norbornene structural units/Butadiene structural units =61/39) | 242,000 | -25 | Siica | 38.6 | 560 | 9 | 60 | 105 | 94 |
| Example 19 | Ring-opened copolymer (2-A) Natural rubber (3-D) | Cross metathesis copolymer (1-1) (2-Norbornene structural units/Natural rubber structural units = 60/40) | 252,000 | -23 | Siica | 38.1 | 540 | 11 | 58 | 103 | 95 |
| Example 20 | Ring-opened copolymer (2-A) Polybutadiene rubber (3-A) | Cross metathesis copolymer (1-J) (2-Norbornene structural units/Butadiene structural units =44/56) | 249,000 | -47 | Siica | 38.8 | 550 | 9 | 60 | 105 | 94 |
| Comp. Ex. 3 | - | Ring-opened copolymer (1'-K) (2-Norbornene structural units/Cyclopentene structural units = 62/38) | 234,000 | -23 | Siica | 36.9 | 420 | 22 | 43 | 100 | 100 |
| Comp. Ex. 4 | - | Ring-opened copolymer (1'-L) (Dicyclopentadiene structural units/Cyclopentene structural units = 55/45) | 238,000 | -25 | Siica | 28.2 | 280 | 28 | 41 | 99 | 101 |

As shown in Table 2, when the rubber composition each containing the copolymer represented by general formula (1) above and a filler even in the case where silica was used as the filler were used to prepare cross-linked rubbers, the resulting cross-linked rubbers had high tensile strength and excellent fracture resistance (Examples 11 to 20) .

On the other hand, when a ring-opened copolymer of a norbornene compound and cyclopentene was used instead of the copolymer represented by general formula (1) above, the cross-linked rubber produced had low tensile strength, insufficient fracture resistance, and insufficient wet grip properties and unsatisfactory heat buildup (Comparative Examples 3 and 4).

## Claims

1. A rubber composition comprising a copolymer represented by general formula (1) and a filler, 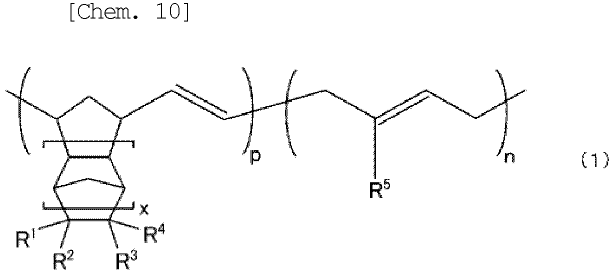 wherein R¹ to R⁴ each independently represent a hydrogen atom, a halogen atom, an optionally substituted hydrocarbon group having 1 to 20 carbon atoms, or a substituent containing a silicon atom, an oxygen atom, or a nitrogen atom, "x" is 0 to 2, R⁵ represents a hydrogen atom or a methyl group, "p" is 30 to 2000, and "n" is 200 to 5000; R¹ and R², and R³ and R⁴ may each be bonded together to form a ring; and multiple R²s to R⁵s may be the same or different from each other, and the values of a plurality of "x" may be the same or different.

2. The rubber composition according to claim 1, wherein the filler is a carbon material.

3. The rubber composition according to claim 1, wherein the filler is silica.

4. A cross-linked rubber formed by cross-linking the rubber composition according to any one of claims 1 to 3.

5. A method for producing the rubber composition according to any one of claims 1 to 3, the method comprising:
a step of obtaining the copolymer represented by general formula (1) by allowing a cross-metathesis reaction to occur between a first ethylenically unsaturated polymer having an alicyclic structure in which the content of unsaturated bond carbon is 10 to 40 mol% and a second ethylenically unsaturated polymer having no alicyclic structures in which the content of unsaturated bond carbon is 20 to 50 mol%, in the presence of a metathesis catalyst, and
a step of compounding the filler with the copolymer.
